(19)

**Europäisches Patentamt**

**European Patent Office**

**Office européen des brevets**

(11) **EP 4 632 638 A1**

(12) **EUROPEAN PATENT APPLICATION**

(43) Date of publication:
**15.10.2025 Bulletin 2025/42**

(21) Application number: **25159697.9**

(22) Date of filing: **24.02.2025**

(51) International Patent Classification (IPC):
*G06Q 10/04* (2023.01)      *G06Q 10/30* (2023.01)
*G06Q 10/0637* (2023.01)

(52) Cooperative Patent Classification (CPC):
**G06Q 10/04; G06Q 10/0637; G06Q 10/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2024 US 202418632948**

(71) Applicant: **Schneider Electric USA, Inc.
Andover, MA 01810 (US)**

(72) Inventors:
• **Tiwari, Pranshu**
  **Andover, MA, 01810 (US)**
• **Nabi, Saleh**
  **Andover, MA, 01810 (US)**
• **Nahane, Harshal**
  **Andover, MA, 01810 (US)**
• **Mailfait, Thibault**
  **Andover, MA, 01810 (US)**

(74) Representative: **Manitz Finsterwald
Patent- und Rechtsanwaltspartnerschaft mbB
Martin-Greif-Straße 1
80336 München (DE)**

(54) **MACHINE LEARNING OPTIMIZATION OF MULTIPLE PROCESSES IN VIEW OF PREDICTED SUSTAINABILITY**

(57)     A method is provided that includes processing, using a trained machine learning model, a set of inputs and a set of outputs associated with actual, simulated, or twinned performance of multiple processes of a complex system on one or more physical machines to generate objective functions for the respective multiple processes, optimizing the set of inputs and the set of outputs of the multiple processes for meeting sustainability constraints for the complex system in view of waste metrics associated with the set of outputs and further for meeting process constraints for the respective multiple processes, and outputting a recommendation for actually operating the multiple processes on the one or more physical machines based on the optimized set of inputs and set of outputs for avoiding a risk of failure to operate the multiple processes while meeting the sustainability constraints for the complex system and the process constraints for the respective, multiple processes.

FIG. 1

**Description**

TECHNICAL FIELD

The present disclosure relates to process optimization, and more particularly, to machine learning optimization of a system of multiple processes in view of the system's global predicted sustainability.

BACKGROUND

Life cycle assessment (LCA) is a data intensive approach for quantifying environmental sustainability of a process, which allows researchers to compare different processes and innovate. Tools currently available can study existing processes and generate reports per guidelines provided by regulatory commissions and boards. The result is a reactive approach for parameters to use for sustainability based on existing process parameters. Newer tools have been developed that simulate a waste vector for one or more simulated processes. These tools are not capable of optimizing parameters for applied inputs for a single simulated process or a system of multiple processes.

Conventional methods and systems for LCA and simulations have generally been considered satisfactory for their intended purpose. However, there is still a need in the art for optimization of a future state of a system having multiple processes.

SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a computer-implemented method of performing sustainability optimization, which includes processing, using a trained machine learning model, a set of inputs and a set of outputs associated with actual, simulated, or twinned performance of multiple processes of a complex system on one or more physical machines to generate objective functions for the respective multiple processes. The method further includes optimizing the set of inputs and the set of outputs of the multiple processes for meeting sustainability constraints for the complex system in view of waste metrics associated with the set of outputs and further for meeting process constraints for the respective multiple processes, and outputting a recommendation for actually operating the multiple processes on the one or more physical machines based on the optimized set of inputs and set of outputs, for avoiding a risk of failure to operate the multiple processes, while meeting the sustainability constraints for the complex system and the process constraints for the respective, multiple processes.

In one or more embodiments, the method can further include optimizing an arrangement of the multiple processes with respect to one another within the complex system for meeting the sustainability constraints for the complex system, wherein the recommendation can further include the optimized arrangement for arranging the multiple processes in relation to one another for operating the multiple processes on the one or more physical machines.

In one or more embodiments, the set of inputs can be used by twin or simulation models of the respective, multiple processes as performed on the one or more physical machines to twin or simulate the configuration parameters of the multiple processes and the set of outputs can result from application of the twin or the simulation models of the multiple processes using the set of inputs.

In one or more embodiments, the method can further include determining whether design samples that include an output of the output set that is the result of one or more inputs of the input set satisfy a condition, and if it is determined that the design samples do not satisfy the condition, causing acquisition of additional design samples.

In one or more embodiments, the set of inputs can include inherent inputs that represent configuration settings of the respective, multiple processes, and applied inputs that represent conditions to which the respective, multiple process are exposed, wherein outputs of the set of outputs can result from applied inputs of the set of inputs for inherent inputs of the set of inputs.

In one or more embodiments, the set of outputs can include at least one desired process output and at least one unwanted output. The unwanted output can include a plurality of waste metrics resulting from actual, simulated, or twinned application of the multiple processes using the set of inputs, and the sustainability constraints can correspond to the plurality of waste metrics. The optimizing the set of inputs and the set of outputs can include optimizing both the at least one desired process output and the at least one unwanted output.

In one or more embodiments, the method can further include deriving an objective function for each process of the multiple processes and optimizing the objective function for each of the processes can be based on sustainability constraints for the process to determine optimal and suboptimal states of the multiple processes, such that the number of optimal and suboptimal states exceeds the number of processes included in the multiple processes. Optimizing the set of inputs and the set of outputs can include optimizing the complex system by selecting from the optimal and suboptimal states for each of the processes of the multiple processes.

In one or more embodiments, the method can further include establishing two or more regimes for one or more respective processes of the multiple processes, each regime being an operational region with different upper and/or lower bounds defined for inputs of the set of inputs for the corresponding process, wherein the optimizing the set of inputs and the set of outputs of the multiple processes can include evaluation of the respective processes operating at the two or more regimes.

In one or more embodiments, the method can further include determining an optimal and one or more suboptimal operating points per at least one process of the multiple processes, and/or per regime of the two or more regimes of at least one of the respective processes, wherein the optimizing the set of inputs and the set of outputs of the multiple processes can include evaluation of the optimal and suboptimal operating points of the multiple processes.

In one or more embodiments, at least one of establishing the regimes and determining the optimal and suboptimal points per process, per regime, can include performing a sensitivity analysis to quantify contribution of the set of inputs for the corresponding process operating at the corresponding regime to output variability related to the set of outputs for the corresponding regime.

In one or more embodiments, optimizing the set of inputs and the set of outputs can use dynamic programming or genetic algorithm optimization.

In one or more embodiments, optimizing the set of inputs and the set of outputs can solve an optimization problem having a number of dimensions associated with the set of inputs and/or the set of outputs, and the method can further include selecting to use one of the dynamic programming or genetic algorithm optimization based on the number of dimensions.

In accordance with another aspect of the disclosure, a system for customizing orchestration of the industrial system is provided. A system for of performing sustainability optimization is provided. The system includes a memory configured to store programmable instructions and a processing device in communication with the memory, wherein the processing device, upon execution of the programmable instructions is configured to perform the disclosed method.

In accordance with still a further aspect of the disclosure, a non-transitory computer readable storage medium and one or more computer programs embedded therein is provided, which when executed by a computer system, cause the computer system to perform the disclosed method.

These and other features of the systems and methods of the subject disclosure will become more readily apparent to those skilled in the art from the following detailed description of the preferred embodiments taken in conjunction with the drawings.

BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.

FIG. 1 is a block diagram illustrating a sustainability optimization system for predicting sustainability of multiple processes, and for optimizing the processes using the sustainability predictions, in accordance with embodiments of the disclosure;

FIG. 2 is a schematic diagram of a cloud-based system used by an AI framework of the sustainability optimization system, in accordance with embodiments of the disclosure;

FIG. 3 is a schematic diagram showing an example overall model representing interaction between models of multiple individual processes, in accordance with embodiments of the disclosure;

FIGS. 4A-4C are flow diagrams showing an example method performed by the sustainability optimization system shown in FIG. 1, in accordance with embodiments of the disclosure;

FIG. 5 is a flowchart showing an example method performed by the sustainability optimization system shown in FIG. 1, in accordance with embodiments of the disclosure; and

FIG. 6 is a block diagram of an exemplary computer system that could be used to implement portions of sustainability optimization system shown in FIG. 1, in accordance with embodiments of the disclosure.

Identical reference numerals have been used, where possible, to designate identical elements that are common to the figures. However, elements disclosed in one embodiment may be beneficially utilized on other embodiments without specific recitation.

DETAILED DESCRIPTION

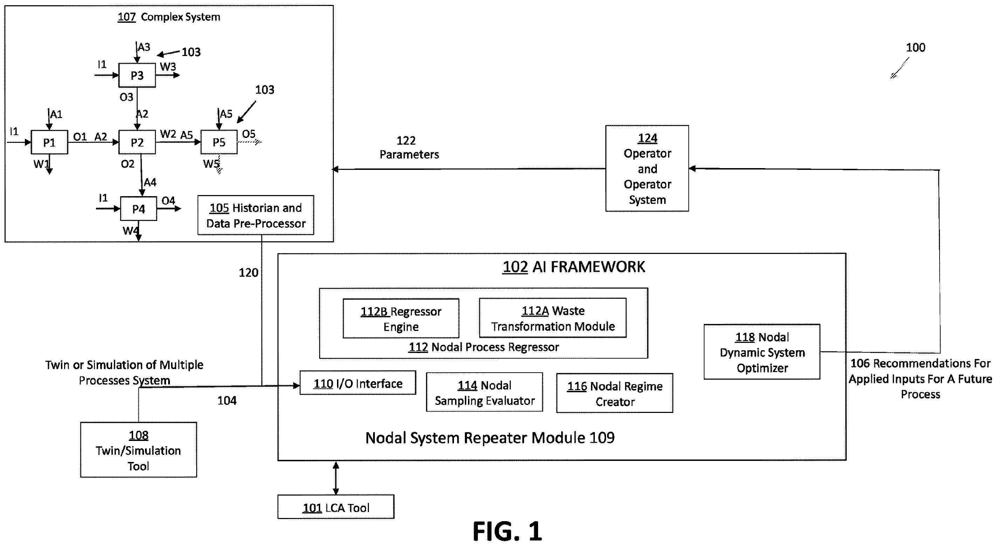

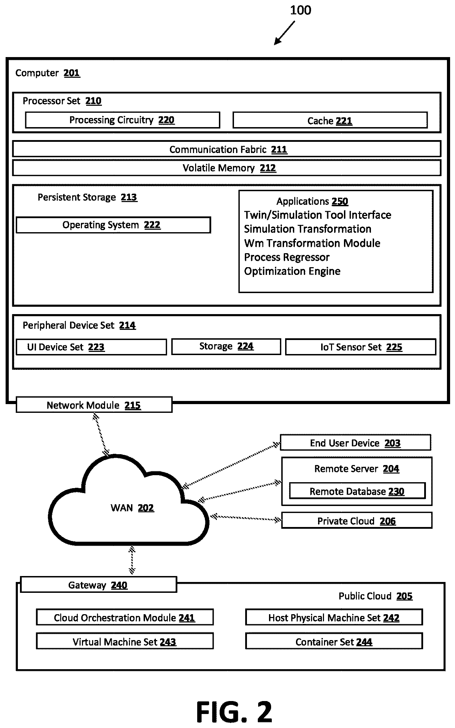

Reference will now be made to the drawings wherein like reference numerals identify similar structural features or aspects of the subject disclosure. For purposes of explanation and illustration, and not limitation, a block diagram of an exemplary embodiment of a sustainability optimization system in accordance with the disclosure is shown in FIG. 1 and is designated generally by reference character 100. Other embodiments of the sustainability optimization system 100 in accordance with the disclosure, or aspects thereof, are provided in FIGS. 2-6, as will be described.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth. It is to be appreciated the embodiments of this disclosure as discussed below are implemented using a software algorithm, program, or code that can reside on a computer useable medium for enabling execution on a machine having a computer processor. The machine can include memory storage configured to provide output from execution of the computer algorithm or program.

As used herein, the term "software" is meant to be synonymous with any logic, code, or program that can be executed by a processor of a host computer, regardless of whether the implementation is in hardware, firmware or as a software computer product available on a disc, a memory storage device, or for download from a remote machine. The embodiments described herein include such software to implement the equations, relationships, and algorithms described above. One skilled in the art will appreciate further features and advantages of the disclosure based on the above-described embodiments. Accordingly, the disclosure is not to be limited by what has been particularly shown and described, except as indicated by the appended claims.

With reference to FIG. 1, sustainability optimization system 100 includes an AI framework 102 that receives system data about a complex system 107 having multiple processes 103. Each process 103 is an onsite process. The processes 103 can be local to one another or remote from one another. The term "process" can refer to an abstracted system, and with respect to processes 103 (e.g., P1-P5) the terms "process" and "system" can be used interchangeably.

The system data can be received (at flow 104) as a digital twin model or a simulation model (referred to as twin/simulation model) of complex system 107 or (at flow 120) from the actual complex system 107. AI framework 102 operates on the system data using artificial intelligence-based algorithms to construct and train an ML model.

The trained ML model can predict a relationship between applied inputs (for a set of inherent inputs) to the individual processes 103 and outputs of the individual processes 103 and complex system 107, including desired and unwanted outputs. The predicted relationships can also include a prediction of costs incurred. Optimal (and optionally sub-optimal) operating points (that define the applied inputs and predict the outputs) for individual processes 103 are selected in view of sustainability (and potentially other) constraints for the overall complex system 107. Recommendations for the optimal (and optionally sub-optimal) operating points for individual processes 103 are output at flow 106. The recommendations can be used for future configurations of complex system 107 and its individual processes 103, avoiding the risk of failure to operate complex system 107 while meeting sustainability constraints and process constraints and/or the risk of incurring avoidable costs while operating complex system 107.

AI framework 102 includes a nodal system repeater module 109 (also referred to as repeater module 109) and a nodal dynamic system optimizer 118 (also referred to as dynamic optimizer 118). Repeater module 109 includes an I/O interface 110 (for communicating with twin/simulation tool 110 or complex system 107), a nodal process regressor 112 (also referred to as process regressor 112), a nodal process sampling evaluator 114 (also referred to as sampling evaluator 114), and a nodal regime creator 116 (also referred to as regime creator 116).

The individual processes 103 (actual and simulated) receive inherent inputs $I$, applied inputs A, forwarded impact O (which is a desired output of the process), and unwanted output W (which includes at least one type of waste).

Some examples of inherent inputs include environmental conditions, such as ambient temperature and ambient pressure, number of turbines, number of compressors, input power of compressor, flow rate of the working fluid, mass of the working fluid, pump size, pump head (capacity), etc. In another example, in the consumer packaged goods (CPG) industry (such as breweries, etc.), the inherent input can be temperature and the applied input for breweries can be amounts of water, yeast, other additives, etc. Some examples of applied inputs include configurations that affect or control the corresponding individual process 103. The configuration can include, for example, settings and arrangement of software, hardware, and/or firmware components used for the individual process 103.

Some examples of a desired output for example processes 103 include a production rate for a manufacturing process, production quality, turbine energy yield for a power plant, enthalpy of the turbine, pressure ratio (increase) of the compressors, pressure ratio (increase) of the pump, working fluid temperature, revolutions per minute (RPM), (in the CPG industry) amount of alcohol produced, etc. As discussed further, desired output can be affected by constraints, such as constraints of machinery, demand, supply chain, or operating settings. For each process there are multiple sub-processes and constraints. An example of several processes L1 are shown below in Table 1:

TABLE 1

| L1-Process | L2- Sub Process | Input Constraints | Sample Output Constraints |
|---|---|---|---|
| Turbine Power | Fuel Handling | Higher & Lower Calorific Value of Fuel | Minimum Energy |
| Turbine Power | Combustion | Ambient Temperature Range Ambient Pressure Range | Steam Quality |
| Turbine Power | Core Turbine Operation | Temperature & Pressure Range Constraints Steam Quality | Efficiency, Waste |
| Brewing-Fermenta-tion | Heat Recovery | | Waste Range |
| Brewing Fermentation | Inoculation | | PH Range of Wort Specific Gravity of Wort Color of Wort (CV) |
| Brewing Fermentation | Fermentation Boiler | PH Range of Wort Specific Gravity of Wort | Beer Quality Color Range pH Range Clarity Range Alcohol Content Range of Bio Products Range of Metabolic Products |

In certain scenarios, two or more individual processes 103 included in the same complex system 107 can be located in the same environment, and therefore may have the same inherent inputs. In addition, in certain scenarios, two or more individual processes 103 included in the same complex system 107 can be located in different environments, and therefore may have different inherent inputs.

Individual processes 103 can have different respective operating regimes at which they can operate. Two or more of individual processes 103 can be cascaded or compounded. Cascading occurs when the output of one individual process 103 is provided as input to another individual process 103 operating in the same regime or a different regime. Compounding refers to two individual process operating in parallel to achieve same output which is fed to next system. The term "regimes" refers to different operating modes or states of operation. In most cases cascading and compounding will remain unimpacted by regime of operation.

Complex system 107 can include a historian and data pre-processor 105 (also referred to as pre-processor 105) that keeps a history of data collected from the inherent inputs $I$, applied inputs A, forwarded impact O (which are desired outputs of the process), and unwanted outputs $W$ for each individual process 103 of complex system 107. The pre-processor of historian and data pre-processor 105 pre-processes the collected data to prepare it for provision to AI framework 102. Historian and data pre-processor 105 can be a centralized system or can be distributed. All or portions of historian and data pre-processor 105 can be local to the different processes 103 for collecting data. All or portions of historian and data pre-processor 105 can be remote from processes 103 and communicate with processes 103 via a public and/or private network. The pre-processing performed by historian and data pre-processor 105 can be local to the different processes 103 or remote from processes 103. Historian and data pre-processor 105 can be deployed for using a physical or virtual machines (such as host physical machine set 242 or virtual machine set 243 shown in FIG. 2) or containers (such as container set 244).

Communication at flows 104, 106, and 120 and between AI framework 102 and LCA tool 101 can use wired or wireless communication links and can use one or more networks. The networks can include one or more of a local area network (LAN), wide area network (WAN), both of which can be private or public networks. For example, communication via flow 120 can use a digital backbone platform that connects operational technology (OT) of complex system 107 with informational technology (IT) used by AI framework 102. An example digital backbone platform is the EXOSTRUXURE® Platform by Schneider Industries SAS.

AI framework 102 can receive the system data at flow 104 from client twin/simulation tool 108 or pre-processor 105. The twin/simulation tool 108 refers to a tool that provides the twin/simulation model as a model of a "future to-be" process. A life cycle assessment (LCA) tool 107 is provided that performs life cycle assessments on the twin/simulation model to assess environmental impacts of the twin/simulation model at its various phases. Any of LCA tool 107, twin/simulation tool 108, and AI framework 102 can be combined into an integrated module or can be discrete modules. AI framework 102 can be modularized as a separate component for interacting with twin/simulation tool 108 and with LCA tool 107.

The AI framework 102 can output a data-driven model. Data-driven models are a class of computational models that primarily rely on historical data collected throughout a system's or process' lifetime to establish relationships between input, internal, and output variables. AI framework 102 can interface with twin/simulation tool 108 to simulate different inherent inputs and applied inputs to the twin/simulation model and receive outputs from the twin/simulation model. This allows users to work with the twin/simulation tool 108 and AI framework to optimize the "future to-be" process, including to optimally maximize a desired output of the process and minimize unwanted outputs while meeting sustainability goals and configurable constraints.

AI framework 102 can be agnostic to the twin/simulation tool 108 and LCA tool 101. An example twin/simulation tool 108 is a modelling, simulation and sustainability tool provided by any hybrid or process LCA, for example Impact-Sphere™. The twin/simulation tool 108 can be a proprietary tool or a tool to be developed in the future, without limitation to a specific twin/simulation tool 108. The processes 103 can include or performed on hardware, software, and/or firmware associated with a variety of different technologies, such as (without limitation) industrial controls, industrial processes (e.g., brewing), supply chain, packaging processes; computer numerical control (CNC) processes, heat, ventilation, and air condition (HVAC), combined heat and power processes (for generating power and thermal energy from a same fuel source); digital factory processes; and process manufacturing (e.g., beer fermentation, meat processing, salt extraction, data center energy optimization, and chiller sustainability optimization (without limitation).

The desired output can be, for example, production rate, production quality, product availability in the supply chain, energy produced, revolutions per minute (RPM), or in the CPG industry, amount of alcohol produced. As discussed further, desired output can be affected by constraints, such as operating temperature, pressure, water level, raw material sourcing and minimum output required to be produced. The unwanted output can be environmental waste, such as carbon dioxide (COX), nitrogen oxide (NOX), carbon monoxide, sulfur oxide (SOX) gases, particulate (ROX, or other pollutants. Such unwanted output can be measured, for example, using the volume rate or concentration of undesired or harmful gases in an outcome flu. Another unwanted output, which can be considered in addition to waste, includes cost (e.g., time, resources, money). In the brewing process example shown in Table (1), unwanted outputs (that need to be reduced or minimized) can include raw material waste (e.g., grain hops), energy usage for cooling, water discharge, and by products.

With additional reference to FIG. 2, a schematic diagram is provided showing possible architectures of sustainability optimization system 100. All or portions of AI framework 102, historian/and data pre-processor 105, twin/simulation tool 108, and operator system 124 can be deployed on local computing devices, such as computer 201, remote computing devices, such as remote server 204, a private cloud 206, or a public cloud 205. Private cloud 206 can include the components shown for public cloud 205, namely a gateway 240, a cloud orchestration module 241, a host physical machine set 242, a virtual machine set 243, and/or a container set 244. Deployment on private cloud 206 and public cloud 205 can be a physical deployment using host physical machine set 242, a virtual deployment using virtual machine set 243, or can use containers (e.g., supported by Docker® or Kubernetes or the like), such as container set 244. Virtual machine set 243 can use a virtual operating system and can be hosted on host physical machine set 242. Additionally or alternatively, container set 244 can use host physical machine set 242.

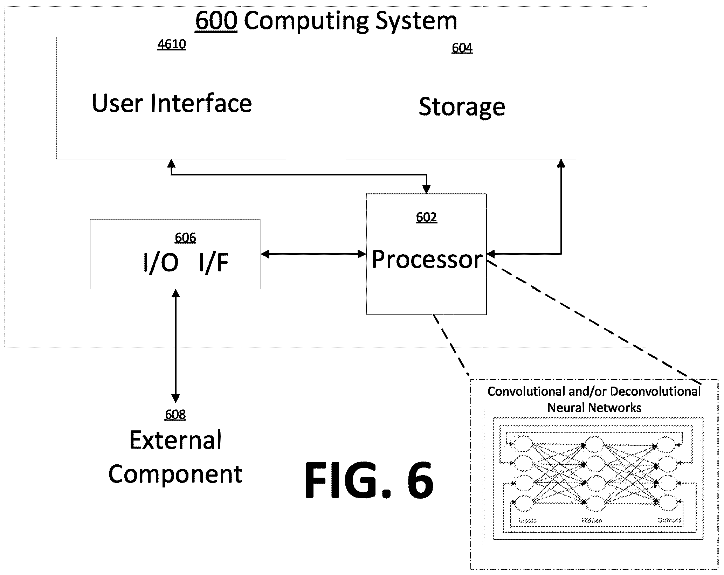

Each of the physical computing devices, e.g., computer 201, end user device 203, remote server 204, cloud orchestration module 241, host physical machines of host physic machine set 242, container set can be configured using a computer system 600 shown in FIG. 6. In the example shown in FIG. 2, computer 201 includes a processor set 210 having processing circuitry 220 and cache 221, communication fabric 211, volatile memory 212, persistent storage 213, peripheral device set 214, and a network module 215. Most of these modules correspond to modules shown and described and greater detail with respect to FIG. 6. Peripheral device set 214 includes a user interface (UI) device set, such as a keyboard, touchscreen, etc., additional storage 224, and an IoT sensor set 225 (such as a microphone, camera, gyroscope, etc.).

End user device 203 can be a smartphone, laptop computer, desktop computer, computer terminal, etc. End user device 203 can communicate with components of complex system 107, twin/simulation tool 108, AI framework 102, and operator systems 124, such as for providing user input, adjusting settings, receiving and analyzing data, providing insights based on the analysis, and causing updating of appropriate components. Remote server 204 is a server that can include a remote database 230. Each of the components of sustainability optimization system 100 shown in FIG. 2, namely computer 201, end user device 203, remote server 204, private cloud 206, and public cloud 205, can communicate via one or more private and public wide-area-networks (WANs) 202. This communication can facilitate provision twin/simulation data from twin/simulation tool 108, historical data about processes 103 or similar processes from historian and data pre-processor 105, and actual data 216 related to processes 103, e.g., from the premises of the respective processes 103 (e.g., one or more factories or data centers) with AI framework 102. Additionally, one or more ML models 202 trained by AI framework 102 via cloud-based computer 201 can be accessible via public cloud 205, private cloud 206, and/or WANs 202.

The individual components of AI framework 102 (repeater module 109 and dynamic optimizer 118), historian and data pre-processor 105, twin/simulation tool 108, operator system 124 can be implemented on one or more of the components of sustainability optimization system 100 shown in FIG. 2.

Applications 250 can be stored in persistent storage 213 of AI framework 102 and can be hosted locally or using container set 244 or virtual machine set 243. The applications 250 can include, for example, the software used for any of I/O interface 110, regressor engine 112B, waste transformation module 112A, sampling evaluator 114, regime creator 116, and dynamic system optimizer 118.

With returned reference to FIG. 1, first looking at the components of repeater module 109, I/O interface 110 includes hardware, software, and/or firmware for communicating with twin/simulation tool 108 and/or pre-processor 105. I/O interface 110 can access, for example, JSON and/or .xls files for communicating with twin/simulation tool 108. Portions of an analytics layer can use open source ML libraries, such as Keras®, Scikit-Learn®, which can be embedded in regressor engine 112B.

Process regressor 112 includes a waste transformation module 112A and a regressor engine 112B, and includes hardware, software, and/or firmware for performing the associated disclosed functions. Process regressor 112 is described in greater detail in concurrently filed patent application entitled MACHINE LEARNING OPTIMIZATION OF A PROCESS IN VIEW OF PREDICTED SUSTAINABILITY and assigned to Schneider Electric USA, Inc., and refers to both the transformation module and process regressor described therein, the contents of which are incorporated herein by reference in their entirety.

At a first stage, waste transformation module 112A receives (via I/O interface 110) a twin/simulation model received via data flow 104 from twin/simulation tool 108 of each of the processes 103, e.g., processes 103 P1-P5. For each twin/simulation model, waste transformation module 112A maps the twin/simulation model to one or more input vectors or matrices (e.g., an inherent input vector or matrix and an applied input vector or matrix) and one or more output matrices (e.g., a desired output vector or matrix and one or more unwanted output vectors or matrices, which include a waste matrix). The process 103, which is not limited to specific type of process, is treated as a generic process. The waste matrix has a first dimension. Waste transformation module 112A applies a mathematically based waste vector reduction function for transforming the waste matrix into a waste vector having a second dimension that is lower than the first dimension. Transformation of the waste matrix into the waste vector can use, for example, a SVD operation.

At a second stage, for each twin/simulation model, regressor engine 112B applies machine learning (ML) regression techniques to the matrices or vectors to which the process was mapped, including the waste vector that was output by waste transformation module 112A. A product of the ML regression techniques is used for further processing by any of sampling evaluator 114, regime creator 116, and dynamic optimizer 118. The product of the ML regression techniques can be one or more ML models. The regression techniques can be used for constructing and/or training the one or more ML models. One example ML regression technique is a maximum likelihood estimation (MLE) process. It is noted that MLE estimation process can be used for both deep learning as well as statistical learning.

MLE is a general approach to estimating parameters in statistical models, such as the constructed one or more ML models, by maximizing the likelihood function, which is defined as $L(\theta|X)=f(X|\theta)$, wherein $X$ is the probability of obtaining data $X,$ given some value of parameter $\theta$.

Another technique used with ML regression is analytically derived mean square error (MSE) that can be used to linearize the machine learning process.

Regressor engine 112B leverages the ML model(s) to understand relationships between applied inputs and outputs (including unwanted outputs, such as waste). In case of multiple waste items, each waste item can be applied to the ML models. The ML models can include, for example, parametric models, such as Lasso, elastic net, and or single-layer neural network (NN) The ML models are hyper-tuned, such as by using inner-cross validation. Hence, for each waste item, a best and most consistent model can be selected in the outer layer.

Regressor engine 112B can further select the best ML model using inner -cross validation, such as for best hyper-tuned parameters. The most consistent model can be selected by leveraging voting in the outer cross validation layer. The selected ML model is then used to derive an objective function for each waste item or waste vector. This function has to be repeated for multiple processes 103 in repeater module 109. In addition, since there can be different waste items, weighted objective functions derived from a regressor function for each waste item can also be combined for each process 103 of complex system 107. These objective functions are used later for global optimization performed by dynamic system optimization 118 for optimizing the multiple processes 103 as operating cooperatively within complex system 107.

Accordingly, the outer cross validation is used to test consistency of a plurality of trained ML model across different test sets and select the trained ML model from the plurality of trained ML models based on the consistency, and the inner validation is used to test hyper-parameter and/or feature selection for the trained ML model and to select hyper-parameters and/or features for the trained ML model.

Sampling evaluator 114 includes hardware, software, and/or firmware for performing the disclosed functions. A surrogate model is started with a priori information for analysis by process regressor 112. As points of the surrogate model are evaluated (also known as drilling), more data is obtained for the surrogate model and available for the learning process. The surrogate model can be updated according to Bayes' rule. After each update, a resulting posterior becomes more certain near some points/samples and more uncertain away from some other points/samples. It is possible to continue adding more training points and obtain a more certain estimate of the regression. Therefore, the sampling evaluator 114 is performed as an iterative procedure.

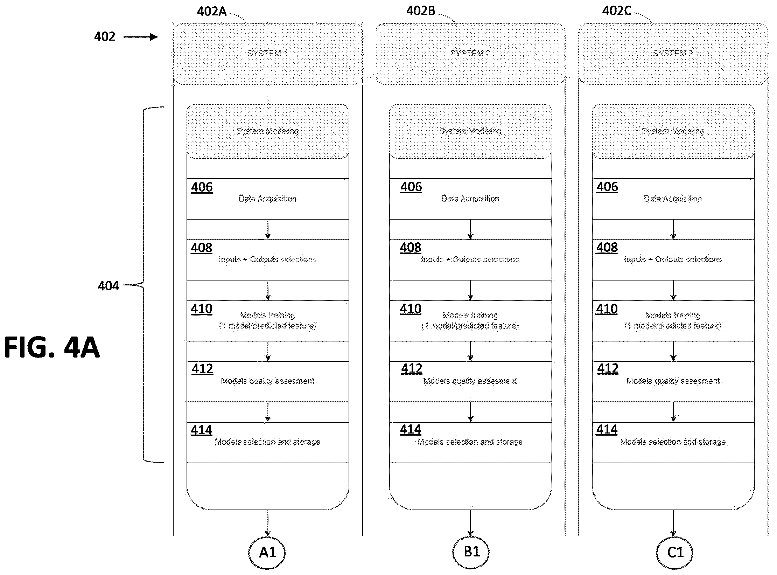

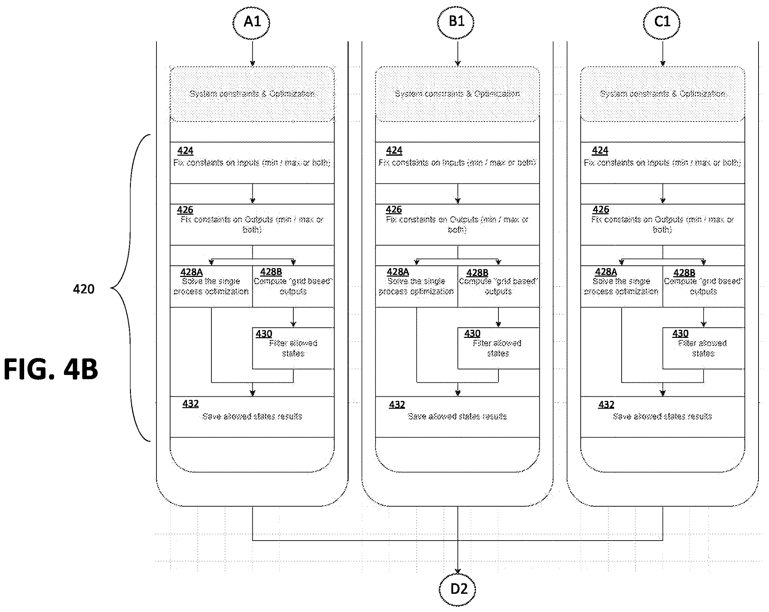

In order to minimize the number of evaluations of the surrogate model, the next samples are chosen "smartly" by using active learning. Although there are many ways to pick smart points, in an example method, the most uncertain one point is selected. Applying this method of active learning includes the following operations, with an example illustrated in FIGS. 4A and 4B:

1. Update an existing training set by choosing and adding a point with the highest uncertainty to the existing training set (e.g., by querying and/or labeling that point). This can be performed using a probabilistic model (e.g., a Gaussian process) to represent an objective function performed by regressor engine 112B and its uncertainty. Thus, the new points/samples are evaluated based on a trade-off between exploration (sampling areas where the objective function is uncertain) and exploitation (sampling areas where the function is expected to be optimal

2. Regressor Engine 112B leverages detailed steps as shown and described with respect to FIG. 4A. Each variable in the waste vector becomes a predictor variable and gets trained at block 410. Also at block 410, model qualities are assessed using double cross validation, and the most consistent model with least error is selected at block 410. Best models are stored as shown at 412. However, in a case where a number of predictor variables are large, the waste vector can be dimensionally reduced by waste transformation module 112A.

3. Repeat operations 1 and 2 until convergence or a stopping condition has been reached (e.g., timeout or a threshold number of tries has been performed). Once the objective function from block 412 is established by regressor engine 112B, the objective function is consumed in nodal regime creator 116 (shown in FIG. 1). Nodal regime creator 116 is configured to perform methods shown in blocks 426, 428A, and 428B. Input and output constraints can be client driven and can be incorporated into the method shown in block 426. Deterministic optimization is performed per process 103 by the method shown in block 428A. The method performed at block 428B includes a sensitivity analysis to compute suboptimal (including super optimal, when one of the constraints is unmet) and optimal values which can be used by dynamic system optimizer 118 (shown in FIG. 1). The procedure described balances exploration and exploitation to efficiently search for optimal input parameters of a system by using the techniques described.

Construction of an accurate metamodel largely depends on development of an appropriate sampling plan for obtaining a sufficient number of samples in the twin/simulation model to capture a trend of an objective function over a relevant design space. The metamodel refers to a regression model of the twin/simulation model of the entire complex system 107 or of individual processes 103. Some embodiments consider the sufficient number of data samples to be proportional to the number of parameters. According to the so-called "rule of ten," which is often used in dataset size estimation, the number of data samples should be about ten times the number of parameters. Training error can also be used as a key performance indicator (KPI) to measure sufficiency of a dataset.

Here, the relevant design space covers the complex system 107 as simulated or digitally twinned. The objective function is determined from a machine learning (ML) regression model of the overall complex system 107, which can be obtained from regression models of the individual processes 103. An appropriate sampling plan that enables accurate capture of a trend of the objective function over the design space enables construction of a globally accurate metamodel and global optimum, as well as locally accurate local metamodels and local optimum. In contrast, a poor sampling plan can lead to liberally sprayed samples in certain parts of the design space and sparsely sprayed samples in other parts of the design space, which could force a resulting metamodel to produce an inaccurate objective function, which can further lead to conclusions that are false for the design space on a global basis. The number of samples to include in the sampling plan can largely depend on the number of design variables used. The design variables are the input set, which includes inherent and applied inputs. One method for selecting the number of samples to include in the sampling plan include Latin hypercube sampling (LHS).

Sampling evaluator 114 evaluates design samples from a twin/simulation model obtained via flow 104, and determines if the design samples are adequate for use by dynamic optimizer 118. In this context, an adequate number of design samples is correlated to accuracy (e.g., lack of errors) of the twin/simulation model; the higher the accuracy of the twin/simulation model, the less design samples are needed for achieving an adequate number of design samples. Thus, sampling evaluator 114 minimizes error of loss function (such as described with respect to Equation (3)) established in nodal process regressor 112 for each process 103.

If it is determined that additional design samples are needed (e.g., by regime creator 116 determining that a condition is not satisfied), sampling evaluator 114 can trigger an acquisition function, which requests that twin/simulation tool 108 perform further exploration and generate additional design samples. A decision to trigger the acquisition function for further exploration can use, for example, a Monte Carlo process, among others. Some embodiments assume a Gaussian distribution for the design samples with unknown parameters, which are iteratively estimated, with more design samples extracted at each iteration.

In particular, once sampling is done, the process of exploitation begins, which involves leveraging the information gained during exploration to focus on the most promising areas of the search space. This transition from exploration to exploitation is crucial for efficiently refining the search towards the optimal solution. The adjustment from exploration to exploitation occurs by updating a probabilistic surrogate model, often a Gaussian process, with the new data obtained during the exploration phase. This updated surrogate model provides a more accurate representation of the objective function and the uncertainty associated with different regions of the search space. During exploitation, the optimization algorithm uses the updated surrogate model to make informed decisions about which points in the search space are most likely to lead to improved objective function values.

Adjustment of the acquisition function for obtaining design samples typically involves a trade-off between exploration and exploitation, where the algorithm balances the desire to explore uncertain regions with the goal of exploiting known promising areas. By adjusting the acquisition function, which balances the exploration and exploitation trade-off, the Bayesian optimization algorithm directs the search towards the regions of the search space that are expected to yield the best objective function values based on the updated surrogate model.

A surrogate model can be provided for each process 103. In the example shown in FIG. 1, five surrogate models are provided for respective processes 103 P1-P5. These surrogate models become part of an objection function Z defined in Equation (15b) below.

Sampling evaluator 114 applies an algorithm that starts with generating an initial sampling plan for obtaining design samples for each of one or more regimes at which each of the individual processes 103 can operate, the design variables for each design sample being assigned a different combination of values. Each design sample has a selected number $n$ of values included in the design variables (i.e., the inherent inputs I and/or applied inputs A for one of the individual processes 103 and a corresponding regime). Each design sample is then evaluated (simulated or applied by the digital twin) by setting the inherent inputs I and/or applied inputs A for the individual processes 103 operating at the corresponding regime and obtaining predicted desired outputs O and unwanted outputs W (as simulated or twinned). The values of the inherent inputs I and/or applied inputs A and predicted desired outputs O and unwanted outputs W are stored as a design sample for each corresponding regime.

In addition, a number of dimensions of inherent inputs, applied inputs, and outputs of the simulation data can be reduced in number if the number of dimensions exceeds a respective threshold number. The reduction in dimensions can include performing a transformation, such as by applying singular value decomposition (SVD).

Process regressor 112 proposes and evaluates, for each regime, an objective function per individual process 103 using the design samples to create a regression model for each corresponding individual process 103, e.g., using MLE and/or regression kriging. The result is an objective function per process, per regime.

Creation of the waste surrogate model uses process regressor 112, which applies Equations (4),(5),(6),(7). Process regressor 112 can further optimize the set of inputs (e.g., applied inputs A for a set of inherent inputs I) and set of outputs (e.g., desired outputs O and unwanted outputs W), such as by using an ML-based stochastic gradient descent for identifying weights for each metric included in an output vector representing the set of outputs, such as a waste vector associated with the unwanted outputs, and applying a multi-objective waste function for determining the optimized set of inputs and the optimized set of outputs in view of sustainability constraints and/or other process system or process constraints.

Process regressor 112 further performs a sensitivity analysis to quantify contribution of input variables (meaning of the inherent inputs I and/or applied inputs A) to output variability of the corresponding regression model per process, per regime.

The sensitivity analysis tests how output of the objective function derived from ML model is affected when constraints in the optimization engine are changed. Some example methods of performing the sensitivity analysis (which can be selected based on the specific model used and available computational resources) are Sobol indices and other sensitivity analysis tools to generate more data by changing the cost of constraints or weights of objective values.

Once optimization is complete, sensitivity analysis can be used to find additional sub-optimal values resulting from different constraints that cause changes to the optimized value obtained from the objective function. The objective function is a summing of weights of the machine learning models used per waste.

Regime creator 116 includes hardware, software, and/or firmware for performing the disclosed functions. Regime creator 116 uses results of the sensitivity analysis to assign regimes per process 103 and can request sample evaluation of each regime, such as when results of the sensitivity analysis indicate that more samples are needed. Regimes are operational regions in which it is expected to have different bounds (e.g., lower and upper bounds) on design variables, which can result in using different design variables per regime. Complex system 107 can have processes 103 operating at one or more regimes, which can be well-defined or can be selected using an engineering design decision.

Additional regimes can be assigned to a process 103. Addition of regimes can be in conjunction with a request for samples. For example, results of a sensitivity analysis may indicate that an operating range (which can be included in one or more existing regimes) is sensitive, but is sparsely sampled in comparison with its sensitivity. For example, a determination of sparse sampling may be due to resolution of the sampling not capturing behavior of the process in the sensitive operating range. Regime creator 116 may request additional sampling within the sensitive operating range and create one or more regimes that are assigned to cover (partially or fully) The sensitive operating range.

Table 2 demonstrates design variables that are used for multiple processes 103 (shown in this example as Process A, Process B, and Process C) and can be used in different regimes (shown in this example as Regime A and Regime B). For example, variable $u$ has different upper and lower bounds for respective Regime A and Regime B. Variables $u$ and $v$ are design variables which are responsible for values $w$. Values $w$ can be affected by upper and lower bound values of $u$ and $v$.

TABLE 2

| Process | Design Variable(x) | Regime A($l$=1) | Regime B($l$=2) |
|---|---|---|---|
| Process A | $u_{ik}$, $v_{ik}$ | $\|\|w_{l,k,l}\|\|$ | $\|\|w_{l,k,l}\|\|$ |
| Process B | $u_{ik}$, $v_{ik}$ | $\|\|w_{l,k,l}\|\|$ | $\|\|w_{l,k,l}\|\|$ |
| Process C | $u_{ik}$, $v_{ik}$ | $\|\|w_{l,k,l}\|\|$ | $\|\|w_{i,k,l}\|\|$ |

wherein $I$ represents variable name, $j$ represents process number, $I$ represents regime.

Regime creator 116 uses optimization, e.g., deterministic optimization, to find an optimal point as well as sub optimal points for each individual process P1-P5 using deterministic optimization as well as sensitivity analysis for each system/process. This is governed by Equation (13).

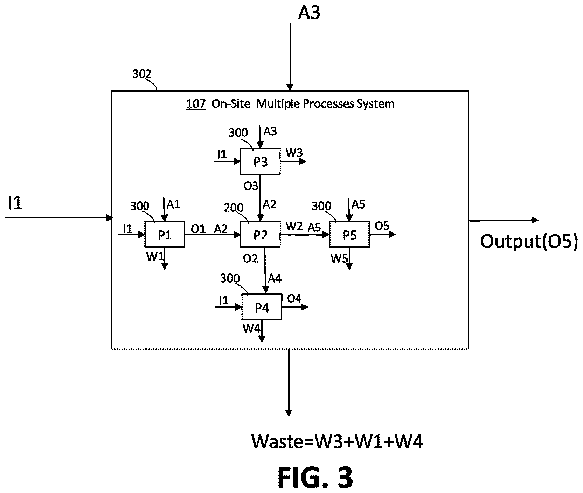

To illustrate, with reference to FIG. 3, an example overall model 302 that represents interaction between models 300 of multiple individual processes (such as processes 103 shown in FIG. 1), including two instances of process P1, process P2, process P4, and process P5. The separate models 300 provided per process and their interconnections are represented as a single model 302 by leveraging a bottom-up approach. The multiple processes corresponding to the different respective models 300 are considered separately for calculating the different respective regimes.

The models 300 representing processes P1 (of which there are two instances) and P4 receive the same inherent input I1 and output respective outputs O1 and O3, both of which are provided as an applied input A2 to the model 300 representing process P2, and output respective wastes W1 and W3. The model 300 representing process P2 outputs output O2 that is provided as an applied input A4 to the model 300 representing process P4 and outputs waste W2 that is provided as applied input A5 to the model 300 representing process P5. The model 300 representing process P4 outputs output O4 (that is not otherwise used) and waste W4. The model 300 representing process P5 only receives applied inputs A5 (two instances) and outputs output O5 and waste W5. Overall model 302 receives inherent input I1 (which is also received by the models 300 representing processes P1 and P4), outputs output O5 (which is output by the model 300 representing process P5), and outputs waste $W = \vec{w_1} + \vec{w_3} + \vec{w_{4+}} + \vec{w_2} + \vec{w_5}$ (which are output by the models 300 representing processes P1 (both instances) and P4. Each operating state will have different values of $W$, hence different operating characteristics produce different waste values.

With returned reference to FIG. 1, dynamic optimizer 118 includes hardware, software, and/or firmware for performing the disclosed functions.

System repeater module 109 generates multiple states of systems/processes 103 P1-P5 for determining an optimal point of point of operation of process 103 P1. System repeater module 109 repeats this procedure for all of processes 103 P1-P5 to generate $W$ and all the potential values of $W$ given different modes of operation of each of processes 103 P1-P5. $P_k = \cup P_i$, wherein each unique value of $P_k$ represents state of operation (also referred to as state of regime). For example, $P_a$ represents a unique value of each of P1, P2, P3, P4, P5, for Regime A. The unique values are driven by design variables of each of the respective processes 103 P1-P5.

System repeater module 109 can generate sub-optimal and optimal data for each system/process 103 P1-P5. Each respective process 103 P1-P5 may have multiple different regimes at which it can operate. The data of respective system/processes 103 P1-P5 are passed through repeater module 109 to generate, by regime creator 116, optimal and sub-optimal values for design variables for optimization of each process 103 per regime.

Once all processes 103 in complex system 107 have been processed by system repeater module 109, dynamic optimizer 118 is used to perform optimization of processes 103 in the context of complex system 107 in order to find optimal values for design variables for all of the processes 103 for optimization of complex system 107. Optimizer finds a solution by selecting an optimization technique and using the selected optimization technique to perform an optimization across all regimes to find a best mode of operation for cascading the individual processes 103. The optimization can include determining differently cascading configurations for different regimes and/or different compounding schemes for different regimes. The best mode of operation can include compounding of individual processes 103, in which case, the iterative repeating performed by repeater module 109 includes repeating different ways of compounding the processes P1-P5.

The best mode of operation is used to provide a recommendation plan. The recommendation plan specifies the inputs (the inherent inputs I and/or applied inputs A) to use for each individual process, including how the individual processes 103 are cascaded or compounded by using outputs from an upstream process 103 as an input to one or more downstream processes 103.

Once the metamodel is optimized, an optimal point is determined, e.g., by applying a deterministic optimization governed by applying Equation (12B) to the metamodel. For a linear system, the optimal point can be found using, for example, exterior point optimization. For a non-linear system the point of optimization can be found, for example, by calculating global minima in space and then passing the global minima to different regimes given the input constraints.

Each individual process 103 can have optimal and sub-optimal design variables for the regimes in which it operates. The optimal and sub-optimal design variables can be used at different stages of operation of the corresponding individual process 103 per regime to find a global optimum for the metamodel of overall complex system 107.

Dynamic optimizer 118 can apply a fitness function to evaluate fitness of the complex system 107. The fitness function can determine a sum of individual objective functions.

Dynamic optimizer 118 determines an appropriate (e.g., most correct) state space for interaction of different regimes within the complex system 107, such as by using dynamic programming or a genetic algorithm (as described in Equations (17) and (18) below). The determined state space is then used to generate the recommendation that can be output at flow 106.

The recommendation can be applied in an action space. The action space refers to action taken by one or more operators or operator systems 124. The operator or operator system(s) 124 can be, for example, user(s) of one or more machines, e.g., a CNC machine or a fermentation module or carbon emission for a captive energy and gas plant. The operator or operator system(s) 124 may accept or reject the optimum recommendation provided by AI framework 102. Ideally the selected ML model would provide explainability which will give context that can be used to provide information that can help the operator consume the intelligent recommendation appropriately.

The recommendation plan includes changes to process controls for processes 103 and how processes 103 are combined in complex system 107. The recommendation can include human-readable suggestions delivered via a user interface (UI) for communicating with one or more operators and/or software instructions for communicating with operator systems 120 and/or process 103 for causing the changes to the process controls.

The human-readable suggestions can instruct the operator(s) to make the suggested process controls changes, explain how to make the suggested process controls changes (e.g., walk the operator(s) through steps for implementing the suggested process controls changes), and/or allow the operator(s) to approve or reject the suggested process controls changes (e.g., before the software instructions are delivered to process 103). In one example, the recommendations can be delivered to the operator(s), operator systems 120, and/or process 103 using an Ecostruxure® platform by Schneider Electric Industries SAS.

The recommendation can provide a waste value associated with an abstracted process for a given set of inherent and applied inputs and desired output. In this way, the operators and/or operator systems 124 can adjust parameters at flow 122 to design and/or adjust the actual process with reduced risk of obtaining an inefficient output (e.g., due to the desired output being unnecessarily low or an unwanted output of cost being unnecessarily high) or harmful output (such as due to the unwanted output, e.g., waste, being unnecessarily high).

Communication between any of I/O interface 110, process regressor 112, sampling evaluator 114, regime creator 116, and dynamic optimizer 118 can use wired or wireless communication links and can use one or more networks. The networks can include one or more of a local area network (LAN), wide area network (WAN), both of which can be private or public networks.

A description of analyses applied to respective individual processes 103A-103C in now provided. Equation (1) shows an example fitness function:

$$f(z) = \begin{cases} \sum_1^n z_n \, if \, z_i > 0 \\ \sum_1^n z^2 \, if \, z_i < 0 \end{cases} eq(1) \qquad (1)$$

A detailed description of an example method performed by process regressor 112 for generating and optimizing surrogate models is now provided. Generation of the surrogate models for the individual processes 103 can use MLE and/or regressive kriging. First a technique using MLE based stochastic gradient is described.

For the function f(x): $R^d \rightarrow R^m$, where $d$ is waste categories, and $m$ is the number of functions needed, a matrix containing partial derivatives I (referred to as Jacobian Matrix $J$ ) can represent a cost function for computing multi-functional gradients for lower dimensional wastes. This function is computed and repeated for each individual process 103. A Jacobian matrix is determined for each individual process 103.

For $m$ functions, the gradient for a stochastic gradient process can be computed as $J$, as shown in Equation (2):

$$J = \begin{bmatrix} \nabla(f_1(X) \\ \nabla(f_2(X)) \\ \nabla(f_m(X)) \end{bmatrix} \tag{2}$$

where

$f_1$, $f_2$, $f_m$ represent function of $X$ for each waste categories.

An example is shown in Equation (3):

Let $\vec{y} = [y_1, y_2, y_3, y_m]$, represent waste for a process $i$, such as processes 102 Pi (for i=1-5) in complex system 107 shown in FIG. 1.

where

$$\vec{y_i} \ is \ vector = \begin{bmatrix} y_1 \\ y_2 \\ y_m \end{bmatrix}$$, $i$ represents a process.

In an example, $y_1$-$y_m$ represent different wastes, e.g., $y_1$ represents carbon emission, $y_2$ represents methane, $y_3$ represents hydrogen, and $y_m$ represents other high substances.

Equation (3) below represents the waste vector from process $i$, such as processes 102 Pi (for i=1-5) in complex system 107 shown in FIG. 1, where $\overrightarrow{F(X)}$ is a combined function that represents waste from process $i$, and each of $\overrightarrow{f(X)}$, $f_2$ $(\overrightarrow{X})$, and $f_3(\overrightarrow{X})$ are individual functions that represents waste values for m substances, respectively.

$$\overrightarrow{F(X)} = \begin{bmatrix} f_1(\overrightarrow{X}) \\ f_2(\overrightarrow{X}) \\ fm(\overrightarrow{X}) \end{bmatrix} \tag{3}$$

Equation (4) shown below can be derived For $X \in R^{n*m}$ matrix, where $n$ is the number of instances of unique simulated experiments and $m$ is the number of sensor data obtained from twin/simulation tool 108, a solution can be derived using Equation (4):

$$J = \begin{bmatrix} \nabla_{w(f_1(X))} \\ \nabla_{w(f_2(X))} \\ \nabla_{w(f_m(X))} \end{bmatrix} = \begin{bmatrix} \frac{\partial(f_1(X))}{\partial w_1} & \cdots & \frac{\partial(f_1(X))}{\partial w_n} \\ \vdots & \ddots & \vdots \\ \frac{\partial(f_m(X))}{\partial w} & \cdots & \frac{\partial(f_m(X))}{\partial w_n} \end{bmatrix} \tag{4}$$

Interpolation of the above to determine maximum likelihood for one function $f_1$ is shown in Equation (5):

$$\nabla_w f(w) = X_{train}^T . XW - X_{train}^T . Y eq(4) \tag{5}$$

where

$W \in R^D$, $D$ denotes the total number of features in $X$ that are part of the surrogate model,
$Y$ is waste values obtained from the twin/simulation tool 108, and
$train$ refers training data.

A maximum likelihood function can also be used derive the above as shown by the following:

$$L(W) = -\log P(y|X,W) = -\log\left(\frac{1}{\sqrt{2\pi\sigma^2}} * e^{\left(\frac{\left(y-x^T w\right)^2}{2*\sigma^2}\right)}\right) \tag{6}$$

$$\Rightarrow L(W) = -\frac{1}{2\sigma^2}(y_n - x_n^T W)^2 + \sum_{n=1}^{N} \log\left(1/(\sqrt{2*\pi\sigma^2})\right) \tag{7}$$

Now minimizing $L(W)$ using Gradient Descent Algorithm as follows:

Consider a vector $\vec{w} = \begin{bmatrix} w_1 \\ w_k \end{bmatrix}$ represent parametric vector

Set I =0 and put initial parameters for learning rate ($\eta$) and Epsilon
Calculate $\nabla L(\vec{W})$ ..... which is gradient Vector
While $\nabla L(W) >$ *Epsilon:*

$$\vec{W}_{I+1} = \vec{W}_I - \eta \sum_{i-.1}^{N} \nabla L\left(\vec{W}\right)^T$$

where *I* refers to iteration and *N* represents total number of measurements over *X* in a batch gradient descent process. In case of mini-batch gradient descent the *N* can number less than a total number of measurements.

$$I=I+1$$

end While
Return $\vec{W}$(A regression Kriging method can be used alternatively or additionally for each of individual processes 103.)

A kriging model approximates an observed response as a sum of global polynomial trend function and a local variation from the global model presented as shown in Equation (8):

$$y(x) = G(x) + Z(x) \tag{8}$$

Where $y(x)$ is the objective function of interest, G(x) is a known global trend function, and $Z(x)$ is a Gaussian stochastic process with mean zero, variance and non-zero covariance. The global trend function shown in Equation (9):

$$G(x) = g(x).T.\vec{\beta} \tag{9}$$

is a product of two vectors, with regression basis function $g^T(\mathbf{x}) = [g_0(\mathbf{x}),g_1(\mathbf{x}),..,g_k\text{-}1(\mathbf{x})]$ (where $k \leq n_s$ with number of samples as $n_s$) and regression coefficients shown in Equation (10):

$$\vec{\beta} = [\beta_1, \beta_2, \beta_3, \beta_4] \tag{10}$$

The deviation from global trend function is provided by Z($\mathbf{x}$) which is a function of $n_s$ sampled data $\mathbf{x}^1,\mathbf{x}^2,...,\mathbf{x}^{ns}$ where any two sampled points are correlated with each other using a spatial basis function. Here, the Gaussian basis function is defined using Equation (11):

$$R(\mathbf{x}^i, \mathbf{x}^j) = exp\left[ -\sum_{p=1}^{P} \theta_p \left| x_p^i - x_p^j \right|^2 \right],$$

$$\tag{11}$$

where $\mathbf{x}^i$, $\mathbf{x}^j$ are any two sampled points with $x_p^i$, $x_p^j$ as their corresponding $p$th components and $\vec{\theta} = [\theta_1, \theta_2, \theta_3 \dots \theta_n]$ is the unknown hyper-parameter vector to be tuned.

Gradient descent based optimization is used in Equation (8)-(11) to derive a multi-objective function. Once the multi-objective function is derived, constraints are used to determine optimum values (e.g., for design variables) to minimize waste using linear programming as explained in Equations (12) and (13).Let $A$ be an $m * n$ Matrix

$m$ is number of constraints and $n$ is the number of variables
Let $\vec{b} \in R^m$ represent constraints from demand data, $\vec{x} \in R^n$ become an optimizing variable (e.g., without limitation, spindle speed, quantity produced) which needs to be minimized while ensuring demand is being met. The demand data can be provided as input by a user or another processing device. Considering a scenario in which there are three noncompeting objective functions, these can be considered as a vector and constraints for an individual process 103 to create a polytope.

A polytope Area is formed for $Zp$ as shown in Equation (12A):

$$Z_P = \vec{C}.\vec{X}, \text{ and } x \in R^n | A.\vec{x} \le \vec{b}, \text{--} \tag{12A}$$

where
$\vec{b}$ is a constraints vector when minimizing $Z_P = \vec{C}.\vec{X}$, and $p$ represents the system/process which was used in the repeater module (e.g., repeater module 109, shown in FIG. 1).

Hence, the objective function can be a sum of multiple competing objective functions when regressed independently, or if considered as a vector, it can be considered as an individua function, as shown in Equations (12B) and (13):

$$\vec{z} = f'\left(t_{\{p,w\}}\right) = f(X) \tag{12B}$$

$$\vec{z} = f(X) + f_2(X) + f_3(X), \tag{13}$$

where
$\vec{z}$ is sum of all objective functions,

$f'(t_{\{p,w\}})$ is a function to represent a vector of individual waste function,
$f(X)$ *represents* represents waste for waste variable 1,
$f_2(X) + f_3(X)$ represent _waste 2,waste 3.

Regarding the sensitivity analysis performed by the process regressor 112, sensitivity analysis is used to understand how uncertainties in model output are linked to uncertainties in model input. The sensitivity analysis of the objective function provides sensitivities of individual design variables to the objective function, which can be used to identify a critical region in design space or reduce dimensionality of the problem. Global sensitivity analysis (GSA) methods can be utilized for the computation of sensitivity indices using a Monte Carlo method. However, the Monte Carlo approach can become computationally expensive for complex mathematical models. The availability of a globally accurate metamodel GSA can be implemented efficiently. As an example, a GSA method using Sobol Indices is applied to the objective function for an improved understanding of model output uncertainties over an entire range of input variables.
In addition, a number of dimensions of identified inputs, applied inputs, and outputs of the simulation data can be reduced number if it exceeds a threshold number by performing a transformation, such as by applying singular value decomposition (SVD).

A sensitivity analysis, such as Sobol global sensitivity analysis, can be used to determine if a condition is satisfied. If the condition is not satisfied, the sensitivity analysis can trigger acquisition of more samples, which can be used to promote population generation. This technique, which can be used e.g., in variance based sampling, can be advantageous for working in higher dimensions when there are multiple processes and multiple waste categories. When the number of samples is increased, the number of regimes is also increased, which adds robustness and reliability to the optimization process.

The example method uses a variance decomposition approach for calculation of Sobol indices. Any model response $y = f(x)$ can be written as three components, as shown in Equation (14):

$$y = f(x_0) + \sum_{i=1}^{n} f_i(x_i) + \sum_{i,j}^{n} f_{ij}(x_i, x_j) + f_{12..k}(x_1, x_2..x_k), \qquad (14)$$

$$f_o = E(Y),$$

$$f_I = E(Y|x_i) - E(Y),$$

$$f_{I,J} = E(Y|x_i, x_j) - f_i, -f_j - E(Y),$$

where $|E(Y|X_i)$ is a major measure of sensitivity. This can be further decomposed in a form of variance decomposition.

A detailed description of certain methods used by nodal dynamic system optimizer 118 is now provided, which performs a global analysis applied to all of processes 103A-103C, including analyzing relationships between processes 103A-103C (e.g., cascading and compounding) for globally optimizing complex system 107. The dynamic optimization performed by dynamic optimizer 118 uses, for example, genetic algorithm optimization (GAO) or dynamic programming (DPGM). Dynamic optimization analyzes how actions taken at one point in time can affect optimization decisions taken at a future point in time. Accordingly, dynamic optimizer 118 investigates best regimes for multiple processes using a defined objective function determined by nodal process regressor 112 and determines a set of design variables that invoked dynamic system optimizer 118. Dynamic system optimizer 118 further dynamically optimizes the individual process 103 based on client configuration of the objective function and a number of variables in the individual process 103's output. Dynamic optimization involves solving an optimization problem using a number of dimensions, and relies on finding a correct state for a given stage (also referred to as process).

In one or more embodiments, dynamic optimizer 118 is capable of performing both GAO and DPGM algorithms and selects which of these algorithms to use based on a number of dimensions involved in solving an optimization problem for performing the optimization. When the number of dimensions is above a predetermined threshold, GAO is used, otherwise DPGM is used. An example threshold is ten, without limitation to this specific threshold.

The first method considered for finding the correct state space is GAO. GAO is a metaheuristic optimization technique that is inspired by the process of natural selection. It is considered as an extension of a random search method algorithms (for which typically no derivative calculation is required), and rather uses determination of function evaluation as better or worse (as compared to the current guess). While random search methods can have very slow convergence, GAO is designed to improve convergence speed.

GAO works by iteratively generating a population of solutions to an optimization problem, and then using a set of genetic operators to evolve the population over time, which includes Evolving gains in a state observer in real time so that a state estimation error is driven to zero. The goal of GAO is to find a (global) solution for multiple, interacting processes 103 that has the best possible fitness, or objective function value. GAO provides a powerful optimization technique that is useful for solving the optimization problem in the context of sustainability optimization system 100 using twin/simulation models, since the number of dimensions corresponds to the optimal state and multiple sub-optimal states of each individual process 103 that is twinned or simulated by the twin/simulation models, which can include each unique value of $P_k$ derived from $\cup P_i$, where $k$ represent regime of entire process $P_i$.

For example, $P_a$ represents a unique set of values that represent individual regimes of Processes 1, 2, 3. Since there are three systems, and each system can have $n$ regimes, there can be 3*n unique set of values. These unique values are given in $P_a$.

GAO includes several operations, including defining the optimization problem. The first operation (a) is performed by process regressor 112 for specifying per individual process 103 the objective function, the decision variables, and the optimization constraints. Regression engine 112B performs optimization based on how waste is varying per regime. This can be done by optimizing the error so that a surrogate model for a process is substantially the same as the process. For example, when complex system 107 includes five individual processes 103, dynamic optimizer 119 can determine decision variables and constraints five times, once for each individual process 103 per regime.

At a following operation (b), an initial population is generated by the respective process regressors 112. In the aforementioned example, the population generation is performed for the five individual processes 103, with each sub-optimal and optimal solution for each individual process 103 being included in the initial population.

At a following operation (c), solutions within the initial population are selected by dynamic optimizer 118 based on constraints imposed by a sequence. In GAO, this sequence represents a candidate solution, the sequence being encoded as a string of values. A string is often called a chromosome, and is typically composed of binary, integer, or real-valued elements. The sequence undergoes evolutionary operations, such as mutation, crossover, and selection, to iteratively improve and optimize solutions for a given optimization problem. This process mimics natural selection and genetic mechanisms to find optimal or near-optimal solutions. Constraints are added directly to the sequences by incorporating them into the encoding of the solutions as part of the chromosome representation. Additionally, specialized genetic operators and evaluation mechanisms can be designed to ensure that the generated sequences adhere to the specified constraints throughout the optimization process. By integrating constraints at the sequence level, GAO can effectively handle optimization problems with diverse requirements and limitations. Specialized genetic operators include adaptive crossover operators, mutation operators with constraints, and variable-length genetic operators, to name a few.

Each sequence represents a different state of waste vector given an existing operating regime of a process. The data used by process regressors 112 to generate the solutions can come from the twin/simulation model, as well as physical constraints. In particular for a carbon twin, the data used can come from dynamical constraints of physical systems as well. For example, it would not be possible to output x power of combustion using underrated steam power input. Other examples of constraints include maximum temperature of a turbine, maximum waste allowed due to regulations, maximum renewable sources of energy due to lack of solar or wind generation, etc.

At a following operation (d), fitness of each solution is evaluated, first by evaluating each solution included in the initial population. In this example, without limitation, the fitness function can be chosen as the cost function related to the waste production. The fitness function value can be represented as cost.

At a following operation (e), the best solutions, meaning those having the highest fitness, are selected as candidates. The best solutions are those that have the highest fitness.

In a following operation (f), genetic algorithms are performed on the selected solutions. The genetic algorithms are used to create new solutions from the existing solutions (e.g., as offspring created from parents). The most common genetic algorithms are mutation and crossover algorithms.

In a following operation, fitness of the new solutions is evaluated. Solutions with the highest fitness will be used in a next iteration of the GAO method.

Operations (c)-(f) are repeated (also referred to as iterated) until a termination criterion is met. The termination criterion could be, for example, a maximum number of iterations, a minimum change in fitness, or a target fitness value.

Once the GAO method has terminated, the current set of solutions represents a set of the best possible solutions to the optimization problem.

Existing crossover schemes include two categories: genotype crossover and phenotype crossover. Genotype crossover is performed by swapping partial strings between the two parents. Genotype crossover is divided into three classes depending on a number of crossing points, single-point crossover, multi-point crossover, and uniform crossover schemes. The phenotype crossover is performed by interpolating the phenotype values of the two parents.

Similarly, the mutation process has two main variants, including genotype and phenotype mutations. For binary-coded GAs, the genotype mutation is the bitwise complement mutation operator.

The phenotype mutation, on the other hand, has two variants that include static and dynamic mutation. The dynamic mutation is applied by performing random displacements for the selected variable from its original values, while the static mutation is carried out by assigning a completely new random value to the selected variable. Dynamic mutation is particularly useful in fine-tuning the population in later stages of GAO evolution when static mutation might cause large perturbation that can lead to structures with low, unacceptable fitness.

Furthermore, depending on the nature of the optimization, binary-coded or real-coded GAO can be used. Real-coded GAO uses operators that are applied at the variable level, which is useful when dealing with continuous optimization problems that do not have any requirement on the continuity and/or smoothness of the resulting solution curves, which is generally the case with most optimization problems.

In the context of sustainability optimization system 100, real-coded GAO can be more relevant, depending on the corresponding learned surrogate model. When the learned surrogate model admits discrete quantities, binary or integer-coded GAO can also be appropriate.

Since sustainability optimization system 100 uses sequencing, meaning operations performed by components of AI framework 102 are performed in the sequence described (see the example sequence shown in FIGS. 4A-4C), the constraints are added in accordance with the sequence, including by selecting a population size. As shown in FIGS. 4A and 4B, optimization of system 1 402A, system 2 402B, and system 3 402C includes individually processing each of system 1 402A, system 2 402B, and system 3 402C by regression engine 112B to determine an objective function that corresponds to each of system 1 402 A, system 2 402B, and system 3 402C. Regime creator 116 finds optimal values for an optimum operating point of system 1 402A as well as sub-optimal values for system 1 402A. This is repeated again by repeater module 109 for System 2 402B and System 3 402C as shown in FIGS. 4A and 4B.

With returned reference to FIG. 1, with respect to DPGM, there is an assumption that arrival at an independent process 103's current state is dependent on a previous state, as taught by Bellman's Optimality. A problem processed by complex system 107 can be divided into stages, where each system point for processing the problem defines a stage. An example stage can be a process 103. A policy decision (defined for complex system 107) can be used at each system point, such as each process 103, for processing the corresponding stage for finding an optimum operating point of each process 103 in complex system 107.The dynamic programming can allocate the optimum regime for each stage, e.g., process 103, so that the net waste of complex system 107 can be minimized.

An example policy decision for each stage can involve recognizing when input to the applied a regression model for the individual process 103 creates a cost and making a choice that minimizes total waste of all stages for the individual process 103. In other examples, a sequence of interrelated decisions can be made at successive decision points, where each decision corresponds to one stage of the problem.

Each stage can have a number of states which are denoted by a waste vector $\|z\|$ associated with the beginning of that stage. The states associated with each stage are found independent of previous process conditioning. In general, the states are the various possible values due to different design variables given in Table 2.

The number of states may be either finite or infinite. The effect of the policy decision at each stage is to transform the current state to a state associated with the beginning of the next stage (possibly according to a probability distribution), forming a network of nodes.

Columns of the nodes can represent the state at which the individual process 103 would operate such that a flow from a node can go only to a node of a next process. Links from a node to nodes in a next column correspond to possible policy decisions for moving to a next operating state given the stage of the individual process 103 being processed and the next process. A value assigned to each link can be interpreted as an immediate contribution to the objective function associated with the independent process 103 for making that policy decision. In the current example, the objective function corresponds to finding a function $|z|$ for minimizing waste while maintaining optimum capacity for outputting desired outputs.

An objective of the procedure described is to find an optimal policy for the overall problem, meaning a prescription for an optimal policy decision at each stage for each of the possible states. In an example stagecoach problem, the procedure is illustrated in Table 3 (shown below), showing that for each stage $(n)n \in 1\text{-}N$ a corresponding optimal decision $(x_{n^*})$ is prescribed for each possible state $(s)$.Given a current state, an optimal policy for the remaining stages is independent of the policy decisions adopted in previous stages in which the process 103 has already been operated.

In Table 3, the value of $Z_{i,r}$ denotes the total waste coming from process system $i$, and regime $r$. Please note the $Z_{i,r}$ represents sum of waste across all m categories of waste (e.g., Carbon dioxide and Nitric Oxide). Here $r$ represents the regime of operation and includes waste across $M$ vector space.

Additionally, in Table 3, $u_n$ and $v_n$ (for regime $n$, where $n$=1-N) represent design variables which are computed for sub-optimal and optimal points governed from optimization performed in Equation (12).

TABLE 3

| Stage State | Process 1 | Process 2 | Process 3 |
|---|---|---|---|
| $U_1$, $V_1$ (Regime 1) | $Z_{11}$ | $Z_{21}$ | $Z_{31}$ |
| $U_2$, $V_2$ (Regime 2) | $Z_{12}$ | $Z_{22}$ | $Z_{32}$ |
| $U_N$, $V_N$ (Regime N) | $Z_{1,N}$ | $Z_{2N}$ | $Z_{3N}$ |

The "to-be" individual processes 103 (meaning the twin/simulated model for corresponding individual processes 103) can be optimized on the basis of a sum of individual objective functions and each objective sum is a sum of each waste item emitted as part of sustainability metrics, as represented by Equation (15):

$$Z = \sum_{i=1}^{i=N} \sum_{m=1}^{m=M} z_{i,m} \qquad (15)$$

This can be also represented as shown in Equation (15b):

$$Z = \sum_{i=1}^{N} Z_i \text{, where } Z_i \text{ is total waste from system } i \qquad (15b)$$

wherein

$Z$ is an objective function of the overall system (e.g., overall complex system 107 shown in FIG. 1) of all the processes (e.g., processes 103 P1-P5 shown in FIG. 1).
$N$ represents total processes,
$z_{i,m}$ represents waste of $m$th, where m can vary from 1 to $M$, category from process $i$,
$i$ is an index number representing the processes 103, and it can take a value from 1 to $N$, and
$M$ is a size of the waste vector. $M$ is constant number and hence for certain processes 103 $M=0$, meaning there are 0 values in the waste vector.

The optimized asynchronous operation of the individual process 103 would be derived using an optimality principal that present node condition is independent of past history. The to-be process can be optimized on the basis of sum of individual objective functions and each objective sum being a sum of each waste item emitted as part of sustainability metrics, which is represented in Equation (15).

Hence the optimal decision can be derived recursively as shown in Equation (16):

$$f_n(s) = \min\left[ c_{s,xn} + f *_{n+1}(x_n)\right], \qquad (16)$$

where

$n$ is the current stage of (also referred to as the nth stage) of the individual process 103,
$s$ is the current state of the nth stage,
$c_{s,xn}$ is cost of taking a decision variable $x_n$ (also referred to as a vertex) from state $s$ in the n-th stage of the individual process 103, and
$f_{n+1}*(x_n)$ is a minimum value of an n+1-th stage of the individual process 103 with decision variable $x_n$. as shown in Equation (17).

$$f *_n(s, x_n) = \frac{min}{x_n}[f_n(s, x_n)] \qquad (17)$$

Results of an experiment performed with a sample are now described.

Following a sensitivity analysis, in which each regime for each individual process 103 is denoted as a vertex (also referred to as a node), a graph G(V, E) is provided that denotes a network of different process and regime combinations. Each regime corresponds to different upper and lower bounds of the design variables. Each process and regime combination corresponds to a different vertex and further has at least one edge. Each edge denotes the waste value connecting different vertices for interactions between different process and regime combinations. An edge can connect different vertices. A path between a first and a second vertex represents waste emission resulting from transitioning from the first vertex to the second vertex.

In an example, individual processes 103 include process A and process B. Process A has output $o$, which includes emission of waste $z_1$, and interacts with process B via three interactions through nodes $v_1$, $v_{22}$, $v_{33}$ and edges $e_{11}$, $e_2$, $e_{33}$. The waste values may be different for output of different processes and regimes of complex system 107.

Process A interacts with three potential regimes of a third process 103, process C, denoted by nodes $c_1$, $c_2$, $c_3$ and edges $v_4$, $v_5$, $v_6$. The objective is to find an optimum navigation path for different regimes. A cost of the objective function can be calculated using a fitness function multiple times, such as the fitness function provided by Equation (16).

Another example is shown below in Table 4, which shows three individual processes 103: Process 1, Process 2, and Process 3 which correspond to respective process systems System A, System B, System C. Each process system has three different regimes of operation, Regime 1, Regime 2, and Regime 3. Each operation is associated with some waste value in m vector space where m represents a number of waste chemicals. Each node value represents the value of objective function $Z_i = \Sigma_m z_{i,m}$, m denoted by an index number of the different wastes.

Table 3 represents different values of objective function of three different process systems. These values are obtained after passing data from each system three times in repeater module 109. Nodal regime creator 116 stores the values after data of the three process systems is passed and stored in nodal regime creator 116 incrementally. Table 4 is generated from Table 3. The different values in Table 3 denoted by $Z_{i,r}$ leads to nodal values in Table 4:

TABLE 4

| Regime | System A (Process 1) | System B (Process 2) | System C (Process3) |
|---|---|---|---|
| Regime1 | Node 1 | Node 4 | Node 7 |
| Regime 2 | Node 2 | Node 5 | Node 8 |
| Regime3 | Node 3 | Node 6 | Node 9 |

In the example of Table 4 there are nine nodes. The node 1, node 2 and node 3 represent different regimens leading to different values of $Z_1$ for System A. System A thus has three regimes leading to three potential different waste values from three different regimes of operation. The problem to be solved can be conceived of as a knapsack problem with constraints. An example solution is demonstrated in Equation (19):

$$Z_T = min \sum_{i=1}^{3} Z_i \ st \ \sum_{1}^{n} A_i . X = b_i \} \qquad (19)$$

When a waste value is determined for a node of Table 4, the value can be entered in Table 4 at the corresponding node. The value represents an edge that can be connected to another node.

Using another example approach, dynamic programming can be used by finding minimum values at process 103 C, followed by process 103 B, followed by process 103 A to arrive at a best navigation path.

The examples and methods described can be applied to multiple processes 103 and multiple regimes per process 103, without limitation to particular number of processes 103 or regimes. The examples and methods can be used to evaluate interaction between different processes 103 at their respective regimes and at respective optimal and sub-optimal operating points. The evaluation includes evaluating different arrangements of the different processes 103, e.g., arranging the processes 103 in series (and specifying an order of the processes 103) or in parallel, cascading the processes 103 and/or compounding the processes 103. By evaluating the different arrangements, an optimal arrangement can be identified that minimizes waste outputs of the complex system 107 (e.g., a sum of wastes that output by the individual processes 103).

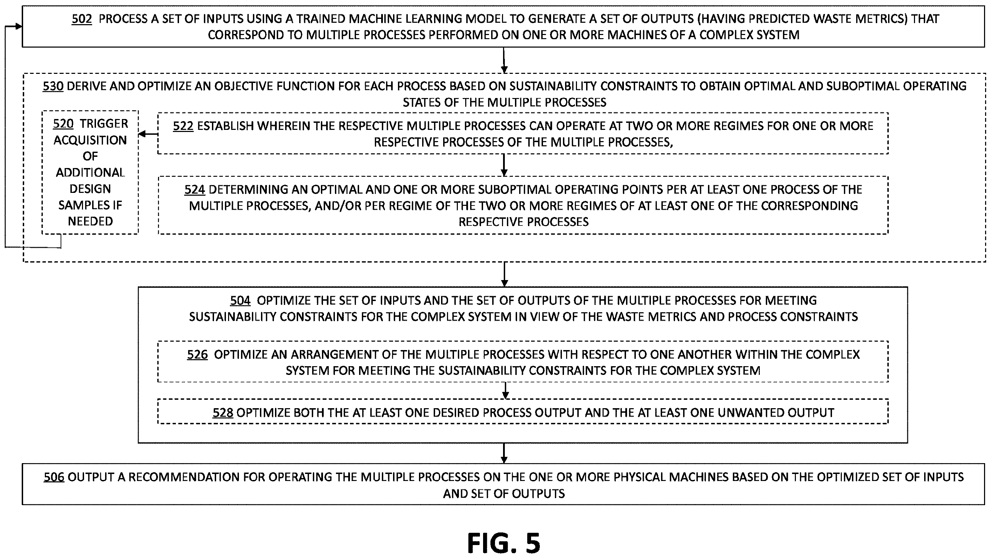

With reference now to FIGS. 4A-4C and FIG. 5, shown are flowcharts demonstrating implementation of the various exemplary embodiments. It is noted that the order of operations shown in FIGS. 4A-4C and FIG. 5 is not required, so in principle, the various operations may be performed out of the illustrated order. Also certain operations may be skipped, different operations may be added or substituted, some operations may be performed in parallel instead of strictly sequentially, or selected operations or groups of operations may be performed in a separate application following the embodiments described herein.

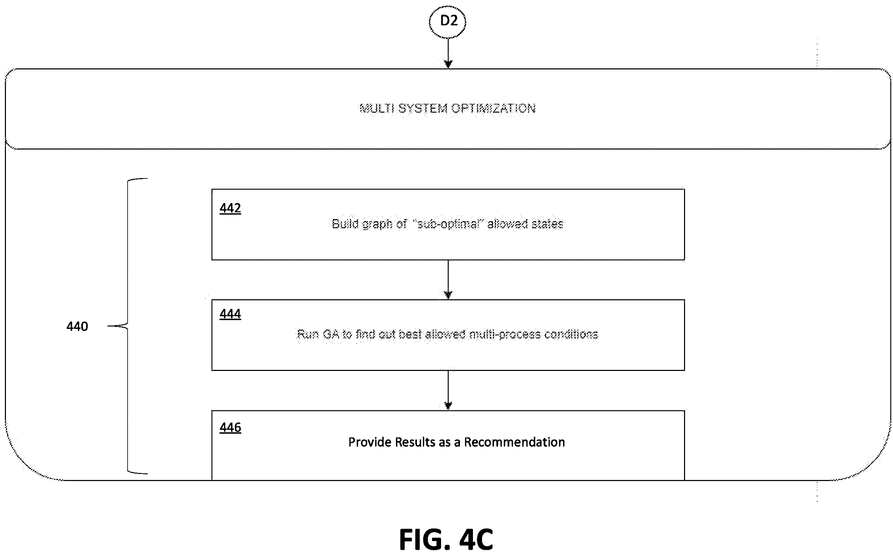

With reference to FIGS. 4A-4C, a flowchart is shown representing an example method performed by an AI framework, such as AI framework 102 of FIG. 1. Three systems 402 are shown, namely System 1 402A, System 2 402B, and System 3 402C. Although the example shows three systems 402, the method can be applied to two or more systems, without limit to a particular number of systems. System 1 402A, System 2 402B, and System 3 402C can each correspond to or be equivalent to a process, such as processes 103 shown in FIG. 1. Each of the systems 402 is analyzed separately for performing system modeling (as shown in FIG. 4A at segment 404, including blocks 406, 408, 410, 412, and 414). The separate analysis of each of systems 402A, 402B, and 402C is continued at A1, B1, and C1, respectively, by determining system constraints and performing system optimization (as shown in FIG. 4B). The results of analysis of the individual three systems 402A, 402B, 402C continues at C2 by performing multi-system optimization (as shown by FIG. 4C at segment 440, including blocks 442, 444, and 446).

FIG. 4A shows operations performed by a regressor module, such as regressor module 112 shown in FIG. 1 for performing system modeling individually for each of the systems being analyzed, in this example System 1 402A, System 2 402B, and System 3 402C. Referring to the process performed individually for each system 402A, 402B, 402C, at block 406 data acquisition is performed in which data is received from one or more twin/simulation tools 108 and/or historic data is received from historian and data pre-processor 105 via I/O interface 110 of FIG. 1 and processed by sample evaluator 114 for assuring that sufficient data is obtained, including requesting and receiving additional data determined to be needed by sample evaluator 114. The data acquired at block 406 can include twin/simulation models. Additional data may be obtained during subsequent iterations as ML models are being trained.

At block 408, input and corresponding output values are selected and used for model training at block 410. This can include reducing the number of dimensions of the output waste vector by waste vector transformation module 112A.

Regressor engine 412 constructs and trains ML models at block 410. Quality of the ML models as assessed at block 412. Acceptable ML models are selected and stored at block 414. The process can be repeated by repeater block 109 until it is determined that sufficient data is acquired and acceptable ML models are selected and stored.

FIG. 4B includes segment 420 (having blocks 424, 426, 428A, 428B, 430, and 432) in which constraints for individual systems and optimization of the individual systems are processed. Outputs at A1, B1, and C1 from blocks 414, which correspond to analysis of systems 402A, 402B, and 402C, respectively, are provided to blocks 424 for the corresponding system 402A, 402B, 402C. At block 424, regime creator 116 creates regimes by setting constraints on inputs to the ML models (e.g., by setting minimum and/or maximum values) for each regime.

At block 426, constraints are set for outputs from the ML models (e.g., by setting minimum and/or maximum values). For example values for constraints for each of systems 402A, 402B, and 402C can be input into AI framework 102, e.g., via an external interface (e.g., external interface 608 shown in FIG. 6). In another example, twin/simulation tool 108 has constraints which can be provided as inputs to AI framework 102. It is noted that blocks 424 and 426 can be performed in parallel or in series.

Blocks 428A and 428B are both performed using output from blocks 424 and 426. Blocks 428A and 428B can be performed in parallel or in any sequence. Blocks 428 and 42B are performed by regressor engine 112B. At block 428A, an optimization is solved for the corresponding system 402. Bayesian optimization can be used, for example, such as to perform waste surrogate model optimization using Equations 4-7. In addition, the set of inputs can be optimized, such as by using an ML-based stochastic gradient descent for identifying weights for each metric included in an output waste vector, which can be used to determine an optimized set of inputs and an optimized set of outputs in view of sustainability constraints and/or other process system or process constraints. Sensitivity analysis is further used to find sub-optimal values that will be used for multi-system optimization as in nodal regime creator 116. Optimal values are determined using Equation (12A) for the respective regimes based on the lower and upper bounds. In one or more embodiments, sub-optimal values are also determined using Equation (12A) for the respective regimes based on the corresponding regime's lower and upper bounds. At block 428B, the optimal and sub-optimal values determined by repressor engine 112B are formed into a grid.

At block 430, allowed states are filtered. Since the grid-based outputs provided by block 428B may include many sub-optimal values, at block 430 values above or below a threshold are filtered out, wherein the threshold is set based on operational needs, such as constraints, etc. At block 432, the outputs from blocks 428A and 430 are stored as allowed states in order to be accessible by dynamic optimizer 118.

Blocks 424-432 are repeated until all of System 1 402A, System 2 402B, and System 3 402C have been processed. The allowed states that were saved at block 432 for each of systems 402A, 402B, and 402C are provided as output D2 to block 442 of FIG. 4C.

With reference to FIG. 4C, segment 440, performed by dynamic optimizer 118, includes blocks 442, 444, and 446, where global optimization is performed for multiple systems (in this example, System 1 402A, System 2 402B, and System 3 402C). At block 442, the output D2 is processed to build a graph of optimal and sub-optimal allowed states. For example, a graph G (V, E) can be built for each regime for each individual system 402A, 402B, 402C, with the vertex V representing the corresponding regime and process.

The waste cost values are generated at nodal regime creator using optimal and sub-optimal design variables derived using Equation (12B). Edges connect different vertices and each regime denotes the node. Given a machine is operating at regime A, the waste emitted /values are given by edges while the state of operation is given by a vertex.

At block 444, an optimization process is performed, leveraging either GAO or DPGM, as appropriate, to determine best allowed conditions for System 1 402A, System 2 402B, and System 3 402C when included together in a complex system, such as complex system 107.

At block 446, results of block 444 are provided as a recommendation, such as to operator and/or operator system 124 shown in FIG. 1.

With reference to FIG. 5, FIG. 5 is performed by an AI framework, such as AI framework 102 shown in FIG. 1. At block 502, a set of inputs and a set of outputs associated with actual, simulated, or twinned performance of multiple processes of a complex system on one or more physical machines to generate objective functions for the respective multiple processes are processed using a trained machine learning model. The set of inputs corresponds to configuration parameters of the multiple processes (such as processes 103 shown in FIG. 1). Each of the processes is configured to be performed on one or more physical machines of a complex system (e.g., complex system 107 shown in FIG. 1). More than one process can be performed on the same physical machines. The set of outputs corresponds to a plurality of predicted waste metrics resulting from performance of the multiple processes on the one or more physical machines.

At block 504, the set of inputs and the set of outputs of the multiple processes are optimized for meeting sustainability constraints for the complex system in view of the waste metrics associated with the set of outputs and further for meeting process constraints for the respective multiple processes.

At block 506, a recommendation for actually operating the multiple processes on the one or more physical machines is output. The recommendation is based on the optimized set of inputs and set of outputs. This recommendation allows avoidance of a risk of failure to operate the multiple processes, while meeting the sustainability constraints for the complex system and the process constraints for the respective, multiple processes.

In one or more embodiments, block 506 can further include optional block 526, as indicated by the dashed lines. At block 526, an arrangement of the multiple processes is optimized with respect to one another within the complex system for meeting the sustainability constraints for the complex system. Here, the recommendation further includes the optimized arrangement for arranging the multiple processes in relation to one another for operating the multiple processes on the one or more physical machines.

In one or more embodiments, the set of inputs are used by twin or simulation models of the respective, multiple processes as performed on the one or more physical machines to twin or simulate the configuration parameters of the multiple processes and the set of outputs result from application of the twin or the simulation models of the multiple processes using the set of inputs.

In one or more embodiments, at optional block 520, acquisition of additional design samples is caused upon determining that additional design samples are needed. Block 520 can include determining whether design samples that include an output of the output set that is the result of one or more inputs of the input set satisfy a condition, and if it is determined that the design samples do not satisfy the condition, acquisition of the additional design samples is caused.

In one or more embodiments, a condition that can trigger further acquisition of data samples can be associated with a regime for which a higher level of resolution is desired for data samples for that regime. For example, a sensitivity analysis can identify a regime (and/or cause establishment of the regime) that has increased sensitivity for its operating region relative to other regimes, such as due to the inputs (inherent and/or applied) having a high contribution to output variability in view of constraint values. Other conditions can include a decision to determine additional suboptimal operating points (e.g., at block 524) and/or a decision that additional data samples are needed for performing optimization at block 504 (such as due to a failure to determine an optimal arrangement that satisfactorily meets optimization constraints. Once further acquisitions of data samples are triggered, the method can include processing the newly acquired data samples, such as by continuing at block 502.

In one or more embodiments, the set of inputs includes inherent inputs that represent configuration settings of the respective, multiple processes, and applied inputs that represent conditions to which the respective, multiple process are exposed. Outputs of the set of outputs result from applied inputs of the set of inputs for inherent inputs of the set of inputs.

In one or more embodiments, the set of outputs includes at least one desired process output and at least one unwanted output. The unwanted output includes a plurality of waste metrics resulting from actual, simulated, or twinned application of the multiple processes using the set of inputs, and the sustainability constraints correspond to the plurality of waste metrics. The method further includes optional block 528, at which both the at least one desired process output and the at least one unwanted output are optimized.

In one or more embodiments, at optional block 530, an objective function for each process is derived and optimized based on sustainability constraints to obtain optimal and suboptimal operating states of the multiple processes. This can include, for example, deriving an objective function for each process of the multiple processes, and optimizing the objective function for each of the processes based on sustainability constraints for the process to determine optimal and suboptimal states of the multiple processes. The number of optimal and suboptimal states exceeds the number of processes included in the multiple processes. In other words, at least one of the processes has at least one suboptimal state. When performing block 506, the optimization includes selecting from the optimal and suboptimal states for each of the processes of the multiple processes.

In one or more embodiments, at optional block 522, two or more regimes for one or more respective processes of the multiple processes are established, each regime being an operational region with different upper and/or lower bounds defined for inputs of the set of inputs for the corresponding process. Here, block 506 includes evaluation of the respective processes operating at the two or more regimes.

In one or more embodiments, at optional block 524, an optimal and one or more suboptimal operating points are determined per at least one process of the multiple processes, and/or per regime of the two or more regimes of at least one of the respective processes. Here, block 506 includes evaluation of the optimal and suboptimal operating points of the multiple processes.

In one or more embodiments, performing at least one of block 522 and block 524 includes performing a sensitivity analysis to quantify contribution of the set of inputs for the corresponding process operating at the corresponding regime to output variability related to the set of outputs for the corresponding regime.

In one or more embodiments, block 504 uses dynamic programming or genetic algorithm optimization.

In one or more embodiments, block 504 solves an optimization problem having a number of dimensions associated with the set of inputs and/or the set of outputs, and the method further comprises selecting to use one of the dynamic programming or genetic algorithm optimization based on the number of dimensions.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions.

These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart(s) and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the flowchart and/or block diagram block or blocks.

With reference to FIG. 6, a block diagram of an example computing system 600 is shown, which provides an example configuration of computing components used in sustainability optimization system, including the physical computing devices, e.g., computer 201, end user device 203, remote server 204, cloud orchestration module 241, host physical machines of host physic machine set 242, and container set 244 . Additionally, all or portions of the computing components could be configured as software, and computing system 600 could represent such portions. Computing system 600 is only one example of a suitable system and is not intended to suggest any limitation as to the scope of use or functionality of embodiments of the disclosure described herein. Computing system 600 can be implemented using hardware, software, and/or firmware. Regardless, computing system 600 is capable of being implemented and/or performing functionality as set forth in the disclosure.

Computing system 600 is shown in the form of a general-purpose computing device. Computing system 600 includes a processing device 602, memory 604, an input/output (I/O) interface (I/F) 606 that can communicate with an internal component, such as a user interface 610, and optionally an external component 608. Processing device 602 can further include or access neural networks, which can include convolutional and/or deconvolutional neural networks.

The processing device 602 can include, for example, a PLOD, microprocessor, DSP, a microcontroller, an FPGA, an ASCI, and/or other discrete or integrated logic circuitry having similar processing capabilities.

The processing device 602 and the memory 604 can be included in components provided in the FPGA, ASCI, microcontroller, or microprocessor, for example. Memory 604 can include, for example, volatile and non-volatile memory for storing data temporarily or long term, and for storing programmable instructions executable by the processing device 602. Memory 604 can be a removable (e.g., portable) memory for storage of program instructions. I/O I/F 606 can include an interface and/or conductors to couple to the one or more internal components 610 and/or external components 608.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flow diagram and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the block diagram block or blocks.

Embodiments of the computing components may be implemented or executed by one or more computer systems, such as a microprocessor. Each computer system 600 can be included within the computing components, or multiple instances thereof. In the example shown, computer system is embedded in the computing components. In various embodiments, computer system 600 may include one or more of a microprocessor, an FPGA, application specific integrated circuit (ASCI), microcontroller. The computer system 600 can be provided as an embedded device. Portions of the computer system 600 can be provided externally, such by way of a centralized computer, a data concentrator, a cockpit computing device controls display of gap status, e.g., notifications about the gap or alerts, or the like.

Computer system 600 is only one example of a suitable system and is not intended to suggest any limitation as to the scope of use or functionality of embodiments of the disclosure described herein. Regardless, computer system 600 is capable of being implemented and/or performing any of the functionality set forth hereinabove.

Computer system 600 may be described in the general context of computer system-executable instructions, such as program modules, being executed by a computer system. Generally, program modules may include routines, programs, objects, components, logic, data structures, and so on that perform particular tasks or implement particular abstract data types.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein, but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1.   A method, comprising:

processing, using a trained machine learning model, a set of inputs and a set of outputs associated with actual, simulated, or twinned performance of multiple processes of a complex system on one or more physical machines to generate objective functions for the respective multiple processes;
optimizing the set of inputs and the set of outputs of the multiple processes for meeting sustainability constraints for the complex system in view of waste metrics associated with the set of outputs and further for meeting process constraints for the respective multiple processes; and

outputting a recommendation for actually operating the multiple processes on the one or more physical machines based on the optimized set of inputs and set of outputs, for avoiding a risk of failure to operate the multiple processes, while meeting the sustainability constraints for the complex system and the process constraints for the respective, multiple processes.

2. The method of claim 1, further comprising optimizing an arrangement of the multiple processes with respect to one another within the complex system for meeting the sustainability constraints for the complex system, wherein the recommendation further includes the optimized arrangement for arranging the multiple processes in relation to one another for operating the multiple processes on the one or more physical machines.

3. The method of claim 1, wherein the set of inputs are used by twin or simulation models of the respective, multiple processes as performed on the one or more physical machines to twin or simulate the configuration parameters of the multiple processes and the set of outputs result from application of the twin or the simulation models of the multiple processes using the set of inputs.

4. method of claim 1, wherein the method further comprises:

determining whether design samples that include an output of the output set that is the result of one or more inputs of the input set satisfy a a condition; and
if it is determined that the design samples do not satisfy the condition, causing acquisition of additional design samples.

5. The method of claim 1, wherein the set of inputs includes inherent inputs that represent configuration settings of the respective, multiple processes, and applied inputs that represent conditions to which the respective, multiple process are exposed, wherein outputs of the set of outputs result from applied inputs of the set of inputs for inherent inputs of the set of inputs.

6. The method of claim 1, wherein the set of outputs includes at least one desired process output and at least one unwanted output, the unwanted output including a plurality of waste metrics resulting from actual, simulated, or twinned application of the multiple processes using the set of inputs, and the sustainability constraints correspond to the plurality of waste metrics, and
wherein the optimizing the set of inputs and the set of outputs includes optimizing both the at least one desired process output and the at least one unwanted output.

7. The method of claim 1, further comprising:

deriving an objective function for each process of the multiple processes; and
optimizing the objective function for each of the processes based on sustainability constraints for the process to determine optimal and suboptimal states of the multiple processes, such that the number of optimal and suboptimal states exceeds the number of processes included in the multiple processes,
wherein the optimizing the set of inputs and the set of outputs includes optimizing the complex system by selecting from the optimal and suboptimal states for each of the processes of the multiple processes.

8. The method of claim 1, further comprising:
establishing two or more regimes for one or more respective processes of the multiple processes, each regime being an operational region with different upper and/or lower bounds defined for inputs of the set of inputs for the corresponding process, wherein the optimizing the set of inputs and the set of outputs of the multiple processes includes evaluation of the respective processes operating at the two or more regimes.

9. The method of claim 8, further comprising determining an optimal and one or more suboptimal operating points per at least one process of the multiple processes, and/or per regime of the two or more regimes of at least one of the respective processes, wherein the optimizing the set of inputs and the set of outputs of the multiple processes includes evaluation of the optimal and suboptimal operating points of the multiple processes.

10. The method of claim 9, wherein at least one of establishing the regimes and determining the optimal and suboptimal points per process, per regime, includes performing a sensitivity analysis to quantify contribution of the set of inputs for the corresponding process operating at the corresponding regime to output variability related to the set of outputs for the corresponding regime.

11. The method of claim 1, wherein optimizing the set of inputs and the set of outputs uses dynamic programming or genetic algorithm optimization.

12. The method of claim 11, wherein optimizing the set of inputs and the set of outputs solves an optimization problem having a number of dimensions associated with the set of inputs and/or the set of outputs, and the method further comprises selecting to use one of the dynamic programming or genetic algorithm optimization based on the number of dimensions.

13. A system, the system comprising:

a memory configured to store a plurality of programmable instructions; and
a processing device in communication with the memory, wherein the processing device, upon execution of the plurality of programmable instructions is configured to:

processing, using a trained machine learning model, a set of inputs and a set of outputs associated with actual, simulated, or twinned performance of multiple processes of a complex system on one or more physical machines to generate objective functions for the respective multiple processes;
optimize the set of inputs and the set of outputs of the multiple processes for meeting sustainability constraints for the complex system in view of waste metrics associated with the set of outputs and further for meeting process constraints for the respective multiple processes; and
output a recommendation for actually operating the multiple processes on the one or more physical machines based on the optimized set of inputs and set of outputs for avoiding a risk of failure to operate the multiple processes while meeting the sustainability constraints for the complex system and the process constraints for the respective, multiple processes.

14. The system of claim 13, wherein upon execution of the plurality of programmable instructions, the processing device is further configured to determine an optimal and one or more suboptimal operating points per at least one process of the multiple processes, and/or per a regime of two or more regimes of at least one of the respective processes, wherein the optimizing the set of inputs and the set of outputs of the multiple processes includes evaluation of the optimal and suboptimal operating points of the multiple processes.

15. The system of claim 14, wherein at least one of establishing the regimes and determining the optimal and suboptimal points per process, per regime, includes performing a sensitivity analysis to quantify contribution of the set of inputs for the corresponding process operating at the corresponding regime to output variability related to the set of outputs for the corresponding regime.

FIG. 1

100

Computer **201**

Processor Set **210**

Processing Circuitry **220**          Cache **221**

Communication Fabric **211**

Volatile Memory **212**

Persistent Storage **213**

Operating System **222**

Applications **250**
Twin/Simulation Tool Interface
Simulation Transformation
Wm Transformation Module
Process Regressor
Optimization Engine

Peripheral Device Set **214**

UI Device Set **223**          Storage **224**          IoT Sensor Set **225**

Network Module **215**

End User Device **203**

Remote Server **204**

Remote Database **230**

WAN **202**

Private Cloud **206**

Gateway **240**

Public Cloud **205**

Cloud Orchestration Module **241**          Host Physical Machine Set **242**

Virtual Machine Set **243**          Container Set **244**

# FIG. 2

A3

302

107 On-Site Multiple Processes System

300 A3
I1 → P3 → W3
O3

300 A1    200    300 A5
I1 → P1 → O1  A2 → P2 → W2  A5 → P5 → O5
W1           O2              W5
             A4
        300
        I1 → P4 → O4
             W4

I1

Output(O5)

Waste=W3+W1+W4

**FIG. 3**

28

**FIG. 4A**

402 →

402A

402B

402C

SYSTEM 1

SYSTEM 2

SYSTEM 3

System Modeling

System Modeling

System Modeling

404

**406** Data Acquisition

**408** Inputs + Outputs selections

**410** Models training (1 model/predicted feature)

**412** Models quality assesment

**414** Models selection and storage

**406** Data Acquisition

**408** Inputs + Outputs selections

**410** Models training (1 model/predicted feature)

**412** Models quality assesment

**414** Models selection and storage

**406** Data Acquisition

**408** Inputs + Outputs selections

**410** Models training (1 model/predicted feature)

**412** Models quality assesment

**414** Models selection and storage

A1

B1

C1

**FIG. 4B**

420

A1

**System constraints & Optimization**

**424**
Fix constraints on Inputs (min / max or both)

**426**
Fix constraints on Outputs (min / max or both)

**428A**
Solve the single process optimization

**428B**
Compute "grid based" outputs

**430**
Filter allowed states

**432**
Save allowed states results

B1

**System constraints & Optimization**

**424**
Fix constraints on Inputs (min / max or both)

**426**
Fix constraints on Outputs (min / max or both)

**428A**
Solve the single process optimization

**428B**
Compute "grid based" outputs

**430**
Filter allowed states

**432**
Save allowed states results

C1

**System constraints & Optimization**

**424**
Fix constraints on Inputs (min / max or both)

**426**
Fix constraints on Outputs (min / max or both)

**428A**
Solve the single process optimization

**428B**
Compute "grid based" outputs

**430**
Filter allowed states

**432**
Save allowed states results

D2

EP 4 632 638 A1

(D2)

MULTI SYSTEM OPTIMIZATION

**442** Build graph of "sub-optimal" allowed states

**444** Run GA to find out best allowed multi-process conditions

**446** Provide Results as a Recommendation

440

**FIG. 4C**

**502** PROCESS A SET OF INPUTS USING A TRAINED MACHINE LEARNING MODEL TO GENERATE A SET OF OUTPUTS (HAVING PREDICTED WASTE METRICS) THAT CORRESPOND TO MULTIPLE PROCESSES PERFORMED ON ONE OR MORE MACHINES OF A COMPLEX SYSTEM

**530** DERIVE AND OPTIMIZE AN OBJECTIVE FUNCTION FOR EACH PROCESS BASED ON SUSTAINABILITY CONSTRAINTS TO OBTAIN OPTIMAL AND SUBOPTIMAL OPERATING STATES OF THE MULTIPLE PROCESSES

**520** TRIGGER ACQUISITION OF ADDITIONAL DESIGN SAMPLES IF NEEDED

**522** ESTABLISH WHEREIN THE RESPECTIVE MULTIPLE PROCESSES CAN OPERATE AT TWO OR MORE REGIMES FOR ONE OR MORE RESPECTIVE PROCESSES OF THE MULTIPLE PROCESSES,

**524** DETERMINING AN OPTIMAL AND ONE OR MORE SUBOPTIMAL OPERATING POINTS PER AT LEAST ONE PROCESS OF THE MULTIPLE PROCESSES, AND/OR PER REGIME OF THE TWO OR MORE REGIMES OF AT LEAST ONE OF THE CORRESPONDING RESPECTIVE PROCESSES

**504** OPTIMIZE THE SET OF INPUTS AND THE SET OF OUTPUTS OF THE MULTIPLE PROCESSES FOR MEETING SUSTAINABILITY CONSTRAINTS FOR THE COMPLEX SYSTEM IN VIEW OF THE WASTE METRICS AND PROCESS CONSTRAINTS

**526** OPTIMIZE AN ARRANGEMENT OF THE MULTIPLE PROCESSES WITH RESPECT TO ONE ANOTHER WITHIN THE COMPLEX SYSTEM FOR MEETING THE SUSTAINABILITY CONSTRAINTS FOR THE COMPLEX SYSTEM

**528** OPTIMIZE BOTH THE AT LEAST ONE DESIRED PROCESS OUTPUT AND THE AT LEAST ONE UNWANTED OUTPUT

**506** OUTPUT A RECOMMENDATION FOR OPERATING THE MULTIPLE PROCESSES ON THE ONE OR MORE PHYSICAL MACHINES BASED ON THE OPTIMIZED SET OF INPUTS AND SET OF OUTPUTS

# FIG. 5

**600 Computing System**

4610
User Interface

604
Storage

606
I/O   I/F

602
Processor

608
External Component

Convolutional and/or Deconvolutional Neural Networks

**FIG. 6**

Europäisches
Patentamt

European
Patent Office

Office européen
des brevets

## EUROPEAN SEARCH REPORT

**Application Number**

EP 25 15 9697

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/037667 A1 (MUKUND ABISHEK [US] ET AL) 9 February 2023 (2023-02-09) | 1-5,13 | INV. G06Q10/04 |
| Y | * paragraph [0080] - paragraph [0097] * * paragraph [0150] - paragraph [0152] * * paragraph [0210] - paragraph [0263] * ----- | 6-12,14, 15 | G06Q10/30 G06Q10/0637 |
| Y | US 2023/325721 A1 (CHENG BOLONG [US] ET AL) 12 October 2023 (2023-10-12) * paragraph [0060] - paragraph [0070] * ----- | 8-10,14, 15 | |
| Y | CN 115 669 990 A (HUBEI CHINA TOBACCO IND CO LTD) 3 February 2023 (2023-02-03) * paragraph [0016] - paragraph [0030] * ----- | 6,7 | |
| Y | KR 2015 0041526 A (KANG) 16 April 2015 (2015-04-16) * paragraph [0015] - paragraph [0022] * ----- | 11,12 | |

|  |
|---|
| **TECHNICAL FIELDS SEARCHED (IPC)** |
| G06Q G05B G06N |

The present search report has been drawn up for all claims

| Place of search | Date of completion of the search | Examiner |
|---|---|---|
| Munich | 22 July 2025 | Chabot, Pedro |

EPO FORM 1503 03.82 (P04C01)

## ANNEX TO THE EUROPEAN SEARCH REPORT
## ON EUROPEAN PATENT APPLICATION NO.

EP 25 15 9697

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | Publication date | Patent family member(s) | Publication date |
|---|---|---|---|
| US 2023037667 A1 | 09-02-2023 | US 2022299952 A1<br>US 2023037667 A1<br>US 2024337993 A1 | 22-09-2022<br>09-02-2023<br>10-10-2024 |
| US 2023325721 A1 | 12-10-2023 | US 10528891 B1<br>US 10558934 B1<br>US 2020097855 A1<br>US 2020097856 A1<br>US 2020302342 A1<br>US 2023325721 A1 | 07-01-2020<br>11-02-2020<br>26-03-2020<br>26-03-2020<br>24-09-2020<br>12-10-2023 |
| CN 115669990 A | 03-02-2023 | NONE | |
| KR 20150041526 A | 16-04-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- MACHINE LEARNING OPTIMIZATION OF A PROCESS IN VIEW OF PREDICTED SUSTAINABILITY. Schneider Electric USA, Inc.